# EUROPÄISCHE PATENTSCHRIFT

(11) **EP 2 763 767 B1**
(45) Veröffentlichungstag und Bekanntmachung des Hinweises auf die Patenterteilung: **23.09.2015**
(21) Anmeldenummer: 12766890.3
(22) Anmeldetag: 25.09.2012
(51) Int. Cl.: B01D 1/22, B01D 3/08

(54) **ROTATIONSVERDAMPFER**
ROTARY EVAPORATOR
ÉVAPORATEUR ROTATIF

(30) Priorität: 08.10.2011 DE 202011106544 U
(43) Veröffentlichungstag der Anmeldung: 13.08.2014
(73) Patentinhaber: KNF Neuberger GmbH, 79112 Freiburg (DE)
(72) Erfinder: HAUSER, Erwin, 79312 Emmendingen (DE); BECKER, Erich, 79189 Bad Krozingen (DE)
(74) Vertreter: Börjes-Pestalozza, Henrich
(86) Internationale Anmeldenummer: PCT/EP2012/004000
(87) Internationale Veröffentlichungsnummer: WO 2013/050111

(56) Entgegenhaltungen:
- EP-A1- 0 504 099
- EP-A1- 2 213 353
- CH-A5- 678 496
- DE-A1- 1 519 593
- DE-A1- 19 710 745
- DE-U1- 20 023 793

## Beschreibung

Die Erfindung betrifft einen Rotationsverdampfer, umfassend einen Rotationsantrieb mit einer Narbe und einem Klemmeinsatz mit hülsenartiger Grundform zum Verklemmen einer als Glashohlwelle ausgebildeten Dampfdurchführung in der Nabe des Rotationsantriebs, wobei der Klemmeinsatz zwei, in Längsrichtung voneinander beabstandete Klemmabschnitte aufweist, die jeweils zumindest eine relativ zur Längsachse des Klemmeinsatzes abgeschrägte Klemmschräge tragen, die mit ihnen zugeordneten Gegenschrägen des Rotationsantriebes derart zusammenwirken, dass die Klemmabschnitte durch axiale Druckbeaufschlagung des Klemmeinsatzes gegen die Glashohlwelle gedrückt werden, wobei der Klemmeinsatz in dessen Längsrichtung orientierte Stützstege hat, die über in Umfangsrichtung des Klemmeinsatzes orientierte Verbindungsstege miteinander verbunden sind und wobei die Stützstege und die Verbindungsstege derart zu der hülsenartigen Grundform des Klemmeinsatzes verbunden sind.

Rotationsverdampfer sind bereits in verschiedenen Ausführungen bekannt. Solche Rotationsverdampfer sind zur schonenden Trennung von Flüssigkeitsgemischen und Lösungen unter Nutzung der unterschiedlichen Siedepunkte der Komponenten bestimmt. So können Rotationsverdampfer auch zur Trocknung, zur Lösemittelrückgewinnung und zu ähnlichen Prozessen genutzt werden. Als Verdampferelement dient regelmäßig ein Heizbad, in dem sich ein erhitztes Wasser- oder Ölvolumen befindet. In der erhitzten Wasser oder Ölmenge des Heizbades rotiert ein Verdampferkolben, der in seinem Kolbeninneren die einzudampfende Lösung enthält. Diese Lösung wird auf den erhitzten Kolben-Innenwänden des rotierenden Verdampferkolbens als dünner Flüssigkeitsfilm verteilt, der dort leicht verdunsten kann. Durch die Rotation des Verdampferkolbens wird auch ein Siedeverzug vermieden und in Verbindung mit dem Heizbad eine homogene Temperaturverteilung in dem zu verdampfenden Medium erreicht. Die zusätzlich bewirkte Durchmischung des Heizbades erleichtert die Regelung der effektiven Heiztemperatur wesentlich. Zur Vermeidung hoher Temperaturen, die mit Gefahren für den Anwender verbunden sind und auch ungewollte chemische Reaktionen im Medium hervorrufen können, wird der Verdampfungsprozess durch ein Evakuieren des Prozessraumes unterstützt. Die Verdampferleistung wird durch die Heizbadtemperatur, die Kolbengröße und Rotationsgeschwindigkeit des Verdampferkolbens sowie den eingestellten Vakuumdruck variiert. Aufgrund der allgemeinen Trägheit der Temperaturen von Medium und Prozess wird die Verdampfung bei konstanten Temperaturen primär über den Druck gesteuert. Um den Prozessraum evakuieren zu können, und um an dem benötigten Kühler die erforderlichen Kühlmittelzu- und -abläufe anschließen zu können, ist an dem auf dem Verdampferkolben umfassenden Glasaufbau des Rotationsverdampfers zumindest ein Schlauchanschluss und regelmäßig mehrere Schlauchanschlüsse vorgesehen, die über jeweils eine flexible Schlauchleitung mit einer Vakuumpumpe oder mit einem Kühlmittelzu- oder -ablauf verbunden sind.

In den vergangenen Jahrzehnten wurde die Bedienbarkeit, die Sicherheit und die Automatisierung der vorbekannten Rotationsverdampfer wesentlich verbessert. Verschiedentlich sind jedoch einige Nachteile feststellbar.

Um den Verdampferkolben im Heizbad rotieren zu lassen, ist dieser Verdampferkolben bei vorbekannten Rotationsverdampfern über eine Schliffverbindung mit einer als Dampfdurchführung dienenden Glashohlwelle verbunden, die in der Nabe des Rotationsantriebes gehalten wird. Auf die Glashohlwelle ist dazu ein meist als Klemmhülse ausgebildeter Klemmeinsatz aufgeschoben, der die Rotationsbewegung der drehantreibbaren Nabe auf die Glashohlwelle überträgt. Um die Glashohlwelle mittels dem Klemmeinsatz in der Nabe verklemmen zu können, weist der bei den vorbekannten Rotationsverdampfern verwendete Klemmeinsatz zwei, in Längsrichtung voneinander beabstandete Klemmabschnitte auf, die jeweils zumindest eine zur Längsachse des Klemmeinsatzes abgeschrägte Klemmschräge tragen. Die an den Klemmabschnitten des Klemmeinsatzes vorgesehenen Klemmschrägen wirken mit ihnen zugeordneten Gegenschrägen des Rotationsantriebs derart zusammen, dass die Klemmabschnitte durch axiale Druckbeaufschlagung des Klemmeinsatzes gegen die Glashohlwelle gedrückt werden. Während das über den Rotationsantrieb vorstehende erste Wellenende der Glashohlwelle mit dem Verdampferkolben verbunden ist, steht das gegenüberliegende zweite Wellenende in eine Anschlussöffnung vor, die ein zu einem Kühler führender Anschlussstutzen umgrenzt. Dabei ist am Antriebsgehäuse des Rotationsantriebs eine Gleitringdichtung eingespannt, die mit einer inneren Ringzone an der rotierenden Glashohlwelle anliegt und diese im Übergangsbereich zum Anschlussstutzen des Kühlers abdichtet.

Die vorbekannten Klemmeinsätze weisen meist zumindest einen ringförmig umlaufenden Hülsenabschnitt auf, der in seinem lichten Querschnitt dem Außendurchmesser der Glashohlwelle zu entsprechen hat. Da der lichte Querschnitt dieser Klemmeinsätze zumindest in diesem ringförmig umlaufenden Hülsenabschnitt also in etwa dem Außendurchmesser der Glashohlwelle entspricht, ist der Klemmeinsatz der vorbekannten Rotationsverdampfer nur mit Mühe auf die Glashohlwelle aufzuschieben. Der ringförmig umlaufende Hülsenabschnitt kann auch ein nachträgliches Einschieben der Glashohlwelle in einen bereits im Rotationsantrieb befindlichen Klemmeinsatz erschweren oder unmöglich machen.

Bei den vorbekannten Rotationsverdampfern sind die Gleitringdichtungen meist nur mit einem nicht unerheblichen Aufwand herstellbar. Diese Gleitringdichtungen sind in Aufbau oder Formgestalt komplex ausgebildet oder aus verschiedenen Komponenten oder Bestandteilen hergestellt. Da es sich bei diesen Gleitringdichtungen um Verschleißteile handelt, die in Zeitabständen auszuwechseln sind, fällt die aufwendige Herstellung der Gleitringdichtungen für den Anwender auch kostenmäßig ins Gewicht.

Aus der EP 2 213 353 A1 ist bereits ein Rotationsverdampfer der eingangs erwähnten Art vorbekannt, der einen Rotationsantrieb mit einer Nabe und einen Klemmeinsatz mit einer hülsenartigen Grundform zum Verklemmen einer als Glashohlwelle ausgebildeten Dampfdurchführung in der Nabe des Rotationsantriebes umfasst. Der Klemmeinsatz weist zwei, in Längsrichtung vorhandene beabstandete Klemmabschnitte auf, die jeweils zumindest eine relativ zur Längsachse des Klemmeinsatzes abgeschrägte Klemmschräge tragen, die mit ihnen zugeordneten Gegenschrägen des Rotationsantriebes derart zusammenwirken, dass die Klemmabschnitte durch axiale Druckbeaufschlagung des Klemmeinsatzes gegen die Glashohlwelle gedrückt werden. Der Klemmeinsatz hat in dessen Längsrichtung orientierte Stützstege, die über Verbindungsstege miteinander verbunden sind, welche Verbindungsstege im Bereich einer mittigen Ringzone des Klemmeinsatzes angeordnet und in Umfangsrichtung des Klemmeinsatzes orientiert sind. Die Stützstege tragen an ihren in entgegengesetzte Richtungen weisenden Stegenden die voneinander beabstandeten Klemmschrägen.

Zwar lässt sich der aus EP 2 213 353 A1 vorbekannte Klemmeinsatz mittels der in Längsrichtung des Klemmeinsatzes fingerförmig vorstehenden Stützstege leicht auf die Glashohlwelle aufschieben. Sobald aber auch die die Stützstege miteinander verbindenden Verbindungsstege ebenfalls auf die Glashohlwelle aufzuschieben sind, wird der weitere Vorschub des Klemmeinsatzes erschwert, weil die Verbindungsstege und die angrenzenden Bereiche der Stützstege eine ringförmige Kontur gleichbleibenden Durchmessers vorgeben. Da die Klemmschrägen an den gegenüberliegenden Stegenden der Stützstege vorgesehen sind, ist ein Klemmschluss zwischen der Glashohlwelle und dem Klemmeinsatz nur in Teilbereichen des Klemmeinsatz-Umfanges möglich, während im Bereich der Verbindungsstege keinerlei Klemmschluss zwischen dem Klemmeinsatz und der Glashohlwelle vorgesehen ist.

Es besteht daher die Aufgabe, einen Rotationsverdampfer der eingangs erwähnten Art zu schaffen, bei welchem das Aufschieben des Klemmeinsatzes auf die Glashohlwelle wesentlich erleichtert ist.

Die erfindungsgemäße Lösung dieser Aufgabe besteht darin, dass die Verbindungsstege wechselweise die auf der einen oder die auf der anderen Seite des Klemmeinsatzes angeordneten Stegendbereiche benachbarter Stützstege verbinden, und dass die voneinander beabstandeten Klemmabschnitte durch die an den gegenüberliegenden Enden des Klemmeinsatzes vorgesehenen und die Klemmschrägen tragenden Verbindungsstege gebildet sind.

Der bei dem erfindungsgemäßen Rotationsverdampfer verwendete Klemmeinsatz weist Stützstege auf, die in dessen Längsrichtung orientiert sind. Die Stützstege des Klemmeinsatzes sind über Verbindungsstege miteinander verbunden, die in Umfangsrichtung des Klemmeinsatzes orientiert sind. Dabei verbinden die Verbindungsstege wechselweise die auf der einen oder die auf der anderen Seite des Klemmeinsatzes angeordneten Stegendbereiche benachbarter Stützstege derart, dass ein jeder Stützsteg mit seinem einen benachbarten Stützsteg über einen auf der einen Seite des Klemmeinsatzes angeordneten und in die eine Umfangsrichtung abstehenden Verbindungssteg verbunden ist, während er mit dem anderen benachbarten Stütztsteg über einen auf der anderen Seite des Klemmeinsatzes gelegenen und in die entgegengesetzte Umfangsrichtung abstehenden Verbindungssteg verbunden ist. Da der Klemmeinsatz durch die Stützstege und die wechselweise an den gegenüberliegenden Endbereichen der Stützstege vorgesehenen Verbindungsstege eine schlaufenförmige oder meanderförmige Außenkontur hat, und da sich diese Außenkontur des Klemmeinsatzes bei Bedarf auf einfache Weise im Umfang weiten

**(Es folgen die Seiten 5 bis 36 der ursprünglichen Beschreibung.)** lässt, kann der Klemmeinsatz bequem auf der Glashohlwelle.positioniert werden. Dabei bilden die an den gegenüberliegenden Enden des Klemmeinsatzes vorgesehenen Verbindungsstege Klemmabschnitte, die in Längsrichtung des Klemmeinsatzes voneinander beabstandet sind, wobei die Klemmabschnitte bildenden Verbindungsstege sich zu den freien Enden des Klemmeinsatzes hin derart verjüngen, dass die Klemmabschnitte jeweils zumindest eine relativ zur Längsachse des Klemmeinsatzes abgeschrägte Klemmschräge tragen, die mit ihnen zugeordneten Gegenschrägen des Rotationsantriebs in der Weise zusammenwirken, dass die Klemmabschnitte durch axiale Druckbeaufschlägung des Klemmeinsatzes gegen die Glashohlwelle gedrückt werden.

Die Klemmschrägen des Klemmeinsatzes können sich in dieselbe Längsrichtung des Klemmeinsatzes verjüngen. Eine bevorzugte Ausführungsform sieht jedoch vor, dass die von den an gegenüberliegenden Enden des Klemmeinsatzes vorgesehenen Verbindungsstegen getragenen Klemmschrägen jeweils einen sich zum benachbarten Ende des Klemmeinsatzes verjüngenden Außenquerschnitt haben und sich somit in entgegengesetzte, nach außen weisende Längsrichtungen verjüngen.

Um den Klemmeinsatz in Längsrichtung derart druckbeaufschlagen zu können, dass sich die Klemmabschnitte reibschlüssig an die Glashohlwelle anlegen, ist es vorteilhaft, wenn der Klemmeinsatz von der einem Verdampfungsgefäß zugewandten Seite der Nabe aus in diese bis zu einem als Gegenschräge ausgebildeten Ringabsatz einsetzbar ist und wenn zur axialen Druckbeaufschlagung des Klemmeinsatzes auf die Nabe ein Spannschraubring, vorzugsweise lösbar aufschraubbar ist, der den über die Nabe vorstehenden Klemmabschnitt des Klemmeinsatzes mit einer am Innenumfang des Spannschraubringes vorgesehenen Gegenschräge beaufschlagt.

Die Glashohlwelle ist regelmäßig über eine Klemm- oder Schliffverbindung mit dem Verdampfungsgefäß verbunden. Diese Schliffverbindung kann sich unter Umständen nur schwer wieder lösen lassen. Eine bevorzugte Ausführungsform gemäß der Erfindung sieht daher vor, dass der Spannschraubring ein Gewinde trägt, das mit einem Gegengewinde an einem Abdrückschraubring zusammenwirkt und dass beim Losschrauben des Abdrückschraubringes vom Spannschraubring der Abdrückschraubring ein Verdampfungsgefäß derart beaufschlagt, dass eine Klemm- oder Schliffverbindung zwischen diesem Verdampfungsgefäß und der das Verdampfungsgefäß tragenden Glashohlwelle lösbar ist.

Um die Relativposition von Glashohlwelle und darauf aufgeschobenem Klemmeinsatz festzulegen, ist es festzulegen, wenn die Glashohlwelle an ihrem Außenumfang zumindest eine Einformung oder Ausformung trägt, der eine Aus- oder Einformung am Innenumfang des Klemmeinsatzes zugeordnet ist.

Die Ausformung kann als vorstehender Zapfen ausgebildet sein, der in der festgelegten Relativposition in eine als komplementäres Loch ausgestaltete Einformung eingreift. Da der Klemmeinsatz und vorzugsweise auch die Glashohlwelle meist rotationssymmetrisch ausgebildet werden, und da die Relativposition von Klemmeinsatz und Glashohlwelle meist nur in Längsrichtung, nicht aber auch in Umfangsrichtung festgelegt werden muß, ist es vorteilhaft, wenn zumindest eine an der Glashohlwelle oder am Klemmeinsatz vorgesehene Einformung als Ringnut und die zugeordnete Ausformung als Ringwulst ausgebildet ist.

Die Glashohlwelle lässt sich auch nachträglich noch in einen in der Nabe des Rotationsantriebs befindlichen Klemmeinsatz einschieben oder daraus herausziehen, wenn die zumindest eine, am Klemmeinsatz vorgesehene Einformung oder Ausformung in dem über die Nabe vorstehenden Teilbereich des Klemmeinsatzes und insbesondere am Innenumfang des über die Nabe vorstehenden Klemmabschnitts angeordnet ist.

Nach einer besonders vorteilhaften Weiterbildung gemäß der Erfindung ist vorgesehen, dass die als Glashohlwelle ausgebildete Dampfdurchführung an ihrem einen ersten Wellenende ein Verdampfungsgefäß trägt und mit ihrem anderen zweiten Wellenende in eine von einem Anschlussstutzen umgrenzte Anschlussöffnung eines Kühlers vorsteht, wobei an der Glashohlwelle ein Dichtring dichtend anliegt, der zwischen dem Anschlussstutzen und dem Antriebsgehäuse eingespannt ist und als Ringscheibe ausgebildet ist, deren äußere Ringzone als Einspannrand vorgesehen ist, wobei die Ringscheibe eine in Längsrichtung der Glashohlwelle umgebogene oder abgewinkelte innere Ringzone hat, und wobei der Dichtring mit einem in Längsrichtung der Galshohlwelle orientierten Teilbereich der Ringscheibe federelastisch an der Glashohlwelle dichtend anliegt.

Der in dem erfindungsgemäßen Rotationsverdampfer vorgesehene Dichtring ist als Ringscheibe ausgestaltet, deren äußere Ringzone als Einspannrand dient, mit welchem die Ringscheibe zwischen dem zum Kühler führenden Anschlussstutzen und dem Antriebsgehäuse des Rotationsgehäuses eingespannt werden kann. Die Ringscheibe hat eine in Längsrichtung der Glashohlwelle umgebogene oder abgewinkelte innere Ringzone, so dass sich der Dichtring mit einem in Längsrichtung der Glashohlwelle orientierten Teilbereich der Ringscheibe federelastisch an die Glashohlwelle dichtend anlegen kann. Der Dichtring dieser, im erfindungsgemäßen Rotationsverdampfer verwendeten Gleitringdichtung zeichnet sich somit durch einen einfachen Aufbau und eine simple Formgestalt auf, wodurch der mit der Herstellung dieses als Verschleißteil benötigten Dichtringes verbundene Aufwand gering gehalten werden kann. Da die innere Ringzone zumindest mit einem ringförmigen Teilbereich unter Vorspannung dichtend an der Glashohlwelle anliegt, wird ein reibungsbedingter Verschleiß des Dichtringes im Bereich der Ringzone praktisch automatisch ausgeglichen.

Damit die Gleitringdichtung den Bereich zwischen dem zum Kühler führenden Anschlussstutzen und der Glashohlwelle sicher und dauerhaft abdichten kann, ist es zweckmäßig, wenn am Anschlussstutzen und/oder am Antriebsgehäuse zumindest eine Ringnut oder ein Ringwulst vorgesehen ist und wenn der zumindest einen Ringnut und/oder dem wenigstens einen Ringwulst vorzugsweise eine komplementäre Ringnut oder ein Ringwulst am Einspannrand des Dichtringes zugeordnet ist. Um die gewünschte Position des Einspannringes zwischen Anschlussstutzen und Antriebsgehäuse sicherzustellen, ist ein zugeordneter und komplementär ausgebildeter Ringwulst oder eine Ringnut am Einspannrand des Dichtringes nicht zwingend erforderlich, aber vorteilhaft.

Der geringe Herstellungsaufwand wird noch begünstigt, wenn der Dichtring einstückig ausgebildet ist.

Eine bevorzugte Ausführungsform gemäß der Erfindung sieht vor, dass der Dichtring als Materialcompound und insbesondere als Tefloncompound hergestellt ist. Insbesondere ein als Tefloncompound hergestellter Dichtring zeichnet sich durch einen geringen Reibungskoeffizienten sowie durch einen reduzierten Verschleiß aus, der auch lange Wartungsintervalle möglich machen kann.

Die gute Abdichtung auch im Bereich des zwischen Anschlussstutzen und Antriebsgehäuse eingespannten Einspannrandes wird begünstigt, wenn am Anschlussstutzen und/oder am Antriebsgehäuse und/oder wenigstens eine Ringnut aufweist, denen eine komplementäre Ringnut oder ein komplementärer Ringwulst am Anschlussstutzen und/oder am Antriebsgehäuse zugeordnet ist.

Eine besonders einfache Formgestalt sieht vor, dass der Dichtring im Längsschnitt etwa U-, L- oder j-förmig ausgebildet ist.

Dabei weist der Dichtring eine im Längsschnitt etwa j- oder insbesondere U-förmige Formgestalt auf, wenn der innere und die Ringöffnung des Dichtringes umgrenzende Randbereich in eine von der Glashohlwelle abgewandte Richtung gebogen oder abgewinkelt ist.

Weitere Merkmale der Erfindung ergeben sich aus der folgenden Beschreibung eines erfindungsgemäßen Ausführungsbeispiels in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: einen in einer perspektivischen Gesamtdarstellung gezeigten Rotationsverdampfer, der einen Geräteständer hat, an dem ein Führungsturm übersteht, wobei an dem Führungsturm seitlich ein als Halterung dienender Schlitten verfahrbar ist, der einen Glasaufbau mit einem, in ein Temperiergefäß eintauchbaren Verdampfungsgefäß trägt, und wobei dem Verdampfungsgefäß ein Rotationsantrieb zugeordnet ist, der das Verdampfungsgefäß im Temperiergefäß um seine Längsachse drehen lässt,
- Fig. 2: den Führungsturm des in Figur 1 gezeigten Rotationsverdampfers in einer perspektivischen Querschnittsdarstellung,
- Fig. 3: den in einer schematisierten Einzelteildarstellung gezeigten und im Führungsturm angeordneten Hubantrieb, der zum Verfahren des als Halterung dienenden Schlittens am Führungsturm bestimmt ist,
- Fig. 4: den in einem Längsschnitt dargestellten Schlitten, der am Führungsturm verfahrbar ist und der den Glasaufbau trägt, wobei am Schlitten ein um eine horizontale Schwenkachse verschwenkbarer Rotationsantrieb vorgesehen ist, mit dem das Verdampfungsgefäß des Glasaufbaus im Temperiergefäß des Rotationsverdampfers rotierbar ist,
- Fig. 5: den Führungsturm aus Figur 2 bis 4 in einer perspektivischen Detailansicht im Bereich des Schlittens, wobei eine Skalierung am Führungsturm zur Anzeige der Hubhöhe und eine Skalierung am Schlitten zur Anzeige des für den Rotationsantrieb gewählten Schwenkwinkels zu erkennen sind,
- Fig. 6: den Rotationsantrieb aus Figur 4 in einem Längsschnitt, wobei der Rotationsantrieb eine drehantreibbare Nabe hat, die eine als Glashohlwelle ausgebildete Dampfdurchführung durchsetzt, wobei die Glashohlwelle an ihrem einen Wellenende das Verdampfungsgefäß trägt und mit ihrem anderen Wellenende in einem, zu einem Kühler führenden Anschlussstutzen mündet, und wobei die Drehbewegung der drehantreibbaren Nabe des Rotationsantriebs auf die Glashohlwelle mittels eines hülsenförmigen Klemmeinsatzes übertragen wird, der auf die Glashohlwelle aufgeschoben ist,
- Fig. 7: den Rotationsantrieb aus Figur 4 und 6 in einem Detail-Längsschnitt im Bereich des auf die Glashohlwelle aufgeschobenen Klemmeinsatzes,
- Fig. 8: den Klemmeinsatz aus Figur 6 und 7 in einer perspektivischen Darstellung,
- Fig. 9: die die Nabe des Rotationsantriebes durchsetzende Glashohlwelle im Bereich eines als Gleitringdichtung dienenden Dichtringes, welcher Dichtring mit einem äußeren Einspannrand zwischen dem kühlerseitigen Anschlussstutzen und einem Antriebsgehäuse des Rotationsantriebs eingespannt ist und mit einer inneren Ringzone dichtend an der rotierenden Glashohlwelle anliegt,
- Fig. 10: den Dichtring aus Figur 9 in einer perspektivischen Darstellung, und
- Fig. 11: den Rotationsverdampfer aus Figur 1 in einer Detaildarstellung im Bereich seiner als Fernbedienung ausgebildeten Bedienelemente.

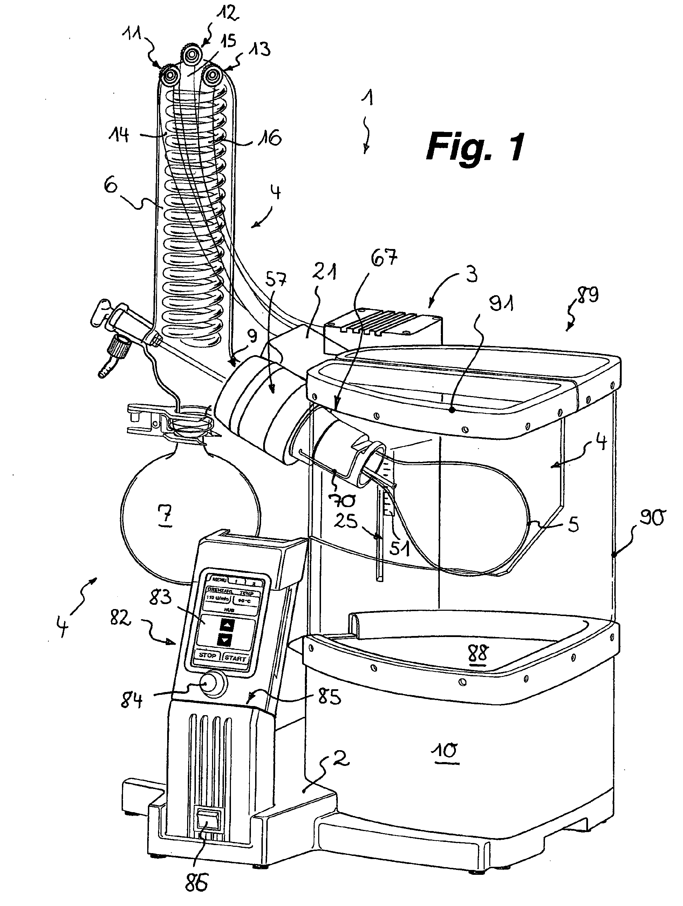

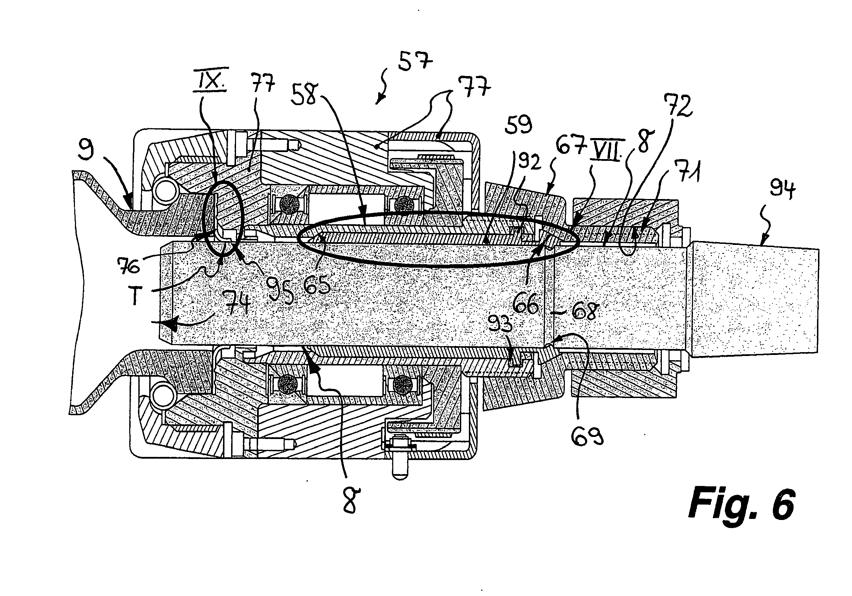

In Figur 1 ist ein Rotationsverdampfer 1 in einer perspektivischen Ansicht dargestellt. Der Rotationsverdampfer 1 hat einen Geräteständer 2, der die Struktur des Rotationsverdampfers trägt. Auf dem Geräteständer 2 steht ein Führungsturm 3 über, der eine vertikal orientierte Längsachse hat. Der Rotationsverdampfer 1 weist einen Glasaufbau 4 auf, der ein hier als Verdampferkolben ausgebildetes Verdampfungsgefäß 5, einen Kühler 6 sowie ein mit dem Kühler 6 lösbar verbundenes Auffanggefäß 7 umfasst. Dabei ist das Verdampfungsgefäß 5 an einer als Dampfdurchführung dienenden und in den Figuren 6, 7 und 9 näher dargestellten Glashohlwelle 8 gehalten, die an ihrem dem Verdampfungsgefäß 5 abgewandten Wellenende in einem Anschlussstutzen 9 des Kühlers 6 mündet.

Der Rotationsverdampfer 1 weist ein hier als Heizbad ausgebildetes Temperiergefäß 10 auf, in welches das Verdampfungsgefäß 5 bereichsweise eintaucht. Um das Verdampfungsgefäß 5 mit einem Teilbereich im Temperiergefäß 10 positionieren zu können und um den Verdampfungsprozess durch Entnahme des Verdampfungsgefäßes 5 aus dem Temperiergefäß 10 bei Bedarf unterbrechen zu können, ist der Glasaufbau 4 und mit ihm das Verdampfungsgefäß 5 am Führungsturm 3 verfahrbar gehalten.

In dem hier als Heizbad ausgebildeten Temperiergefäß 10 befindet sich beispielsweise ein erhitztes Wasser- oder Ölvolumen. In der erhitzten Wasser- oder Ölmenge des Temperiergefäßes 10 rotiert das Verdampfungsgefäß 5, das in seinem kolbenförmigen Innenraum die einzudampfende Lösung enthält. Diese Lösung wird auf den erhitzten Gefäß-Innenwänden des rotierenden Verdampfungsgefäßes 5 als dünner Flüssigkeitsfilm verteilt, der dort leicht verdunsten kann. Durch die Rotation des Verdampfungsgefäßes 5 wird auch ein Siedeverzug vermieden und in Verbindung mit dem im Temperiergefäß 10 befindlichen Heizbad 10 eine homogene Temperaturverteilung in dem zu verdampfenden Medium erreicht. Die zusätzlich bewirkte Durchmischung des Heizbades erleichtert die Regelung der effektiven Heiztemperatur wesentlich. Zur Vermeidung hoher Temperaturen, die mit Gefahren für den Anwender verbunden sind und auch ungewollte chemische Reaktionen im Medium hervorrufen können, wird der Verdampfungsprozess durch ein Evakuieren des Prozessraumes unterstützt. Die Verdampferleistung wird durch die Heizbadtemperatur, die Größe des Verdampfungsgefäßes 5 und dessen Rotationsgeschwindigkeit sowie den eingestellten Vakuumdruck variiert. Aufgrund der allgemeinen Trägheit der Temperaturen von Medium und Prozess wird die Verdampfung bei konstanten Temperaturen primär über den Druck gesteuert. Um den Prozessraum evakuieren zu können und um einen Kühlmittelzu- und -abfluß 6 zu bewerkstelligen, ist an dem auch das Verdampfungsgefäß 5 umfassenden Glasaufbau des Rotationsverdampfers zumindest ein Schlauchanschluss und regelmäßig mehrere Schlauchanschlüsse 11, 12, 13 vorgesehen, die über jeweils eine flexible Schlauchleitung 14, 15, 16 mit einer Vakuumpumpe beziehungsweise mit dem Kühlmittelzu- und -abfluß verbunden sind.

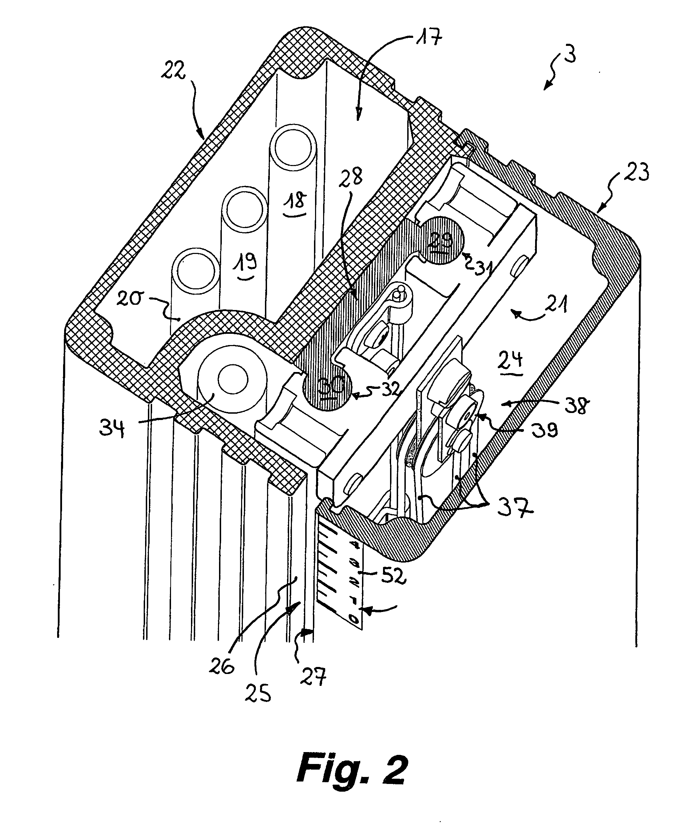

Aus der perspektivischen Querschnittsdarstellung in Figur 2 wird deutlich, dass der Führungsturm 3 einen in seiner Längserstreckung orientierten Kanal 17 aufweist, in dem ein Leitungsabschnitt zumindest einer mit dem Glasaufbau 4 verbundenen Fluidleitung vorgesehen ist. Die zumindest eine Fluidleitung endet in einem ihr zugeordneten, hier aber nicht weiter dargestellten Schlauchanschluss, der an einem bodenseitigen und dem freien Ende des Führungsturmes 3 abgewandten Bereich des Rotationsverdampfers angeordnet ist. Da somit ein vergleichsweise langer Leitungsabschnitt der zumindest einen Fluidleitung im Kanal 17 des Führungsturmes 3 geführt ist, kann der außerhalb des Führungsturmes 3 frei verlegte und hier als Schlauchleitung 14, 15 oder 16 ausgebildete Leitungsabschnitt dieser Fluidleitung vergleichsweise kurz gehalten werden. Das Risiko eines versehentlichen Verfangens in diesen freiverlegten Schlauchleitungen 14, 15, 16 ist damit minimiert. Da die zumindest eine Fluidleitung innerhalb des Führungsturmes 3 nach unten geführt wird, können die Anschlüsse dieser Fluidleitungen an unbewegten Teilen der Struktur im bodenseitigen und dem freien Ende des Führungsturmes 3 abgewandten Bereich des Rotationsverdampfers 1 angeordnet werden. Bei dem hier dargestellten Rotationsverdampfer sind die Anschlüsse der Fluidleitungen in der Bodenplatte des Geräteständers 2 angeordnet.

Um im Kanal 17 des Führungsturmes 3 beispielsweise die zu einer Vakuumpumpe führende Fluidleitung sowie die als Kühlmittelzuund -abfluß vorgesehenen Fluidleitungen und somit mehrere Fluidleitungen führen zu können, ist vorgesehen, dass die im Kanal geführten Leitungsabschnitte als Schlauchleitungen 18, 19, 20 ausgebildet sind. Dabei sind die im Kanal 17 geführten und als Leitungsabschnitt dienenden Schlauchleitungen 18, 19, 20 auch an ihrem dem bodenseitigen ersten Schlauchanschluss abgewandten Leitungsabschnittsende mit einem zweiten, hier ebenfalls nicht dargestellten Schlauchanschluss verbunden, der an dem freien Endbereich des Führungsturmes 3 angeordnet ist.

Um den Glasaufbau 4 in vertikaler Richtung verfahren zu können, und um dessen Verdampfungsgefäß 5 in das Temperiergefäß 10 absenken sowie aus dem Temperiergefäß 10 auch wieder anheben zu können, ist der Glasaufbau an einer als Schlitten ausgebildeten oder einen Schlitten 21 aufweisenden Halterung gehalten. Der Schlitten 21 ist seitlich am Führungsturm 3 verfahrbar. Da der Führungsturm 3 somit unbewegt bleibt, können die beim Anheben und Absenken des Verdampfungsgefäßes 5 bewegten Teile minimiert werden.

Der Führungsturm 3 ist aus zumindest zwei Profilabschnitten 22, 23 gebildet, die in einer in Längserstreckung des Führungsturmes 3 orientierten Trennlage vorzugsweise lösbar miteinander verbunden sind. Dabei weist der Führungsturm 3 einen Profilabschnitt 22 auf, der als Hohlprofil ausgebildet ist, dessen zumindest einer Hohlprofil-Innenraum den Kanal 17 des Führungsturmes 3 bildet. Die Profilabschnitte 22, 23 des Führungsturmes 3 umgrenzen einen Hohlraum 24, der an einem in vertikaler Richtung orientierten Führungsschlitz 25 offen ausgebildet ist. Der Führungsschlitz 25 ist in der Trennlage zwischen den Profilabschnitten 22, 23 angeordnet und von den benachbarten Schmalrändern 26, 27 dieser Profilabschnitte 22, 23 umgrenzt. Im Hohlraum 24 ist die dem Schlitten 21 zugeordnete Schlittenführung 28 vorgesehen. Diese Schlittenführung 28 weist zwei, quer zur Führungsrichtung voneinander beabstandete und im Querschnitt runde Führungsstäbe 29, 30 auf, die von Führungslöchern 31, 32 im Schlitten 21 umgriffen werden.

Der Schlitten 21 trägt zumindest einen Verbindungsarm 33, der den Führungsschlitz 25 durchsetzt und mit dem Glasaufbau 4 verbunden ist. Der Schlitten 21 ist von einer Hebeposition gegen die Rückstellkraft zumindest einer Gasdruckfeder 34 in eine Absenkstellung verfahrbar. Zum Verfahren des Schlittens 21 ist eine als Hubantrieb dienende Seilwinde 35 vorgesehen, die ortsfest gegenüber dem Führungsturm 3 an der Struktur des Rotationsverdampfers 1 gehalten ist. Die Seilwinde 35 weist ein, auf eine Seiltrommel 36 aufwickelbares Seil 37 auf, das am Schlitten 21 derart geführt ist, dass durch Auf- und Abwickeln des Seiles 37 und Verkürzen und Verlängern des über die Seilwinde 35 überstehenden Seilabschnitts der Schlitten 21 von der Rückstellkraft angehoben oder gegen die Rückstellkraft abgesenkt werden kann. Bei einem Stromausfall gibt die Seilwinde 35 das darauf aufgewickelte Seil 37 derart frei, dass die Rückstellkraft den Schlitten 21 in die Hebeposition bewegen kann; da der Schlitten 21 bei einem Stromausfall somit automatisch in seine Hebeposition bewegt wird, in welcher sich das Verdampfungsgefäß 5 mit Abstand über dem Temperiergefäß 10 befindet, wird der im Verdampfungsgefäß 5 ablaufende Prozess vorsorglich unterbrochen und eine unkontrollierte Überhitzung der zu verdampfenden Flüssigkeit mit Sicherheit unterbunden.

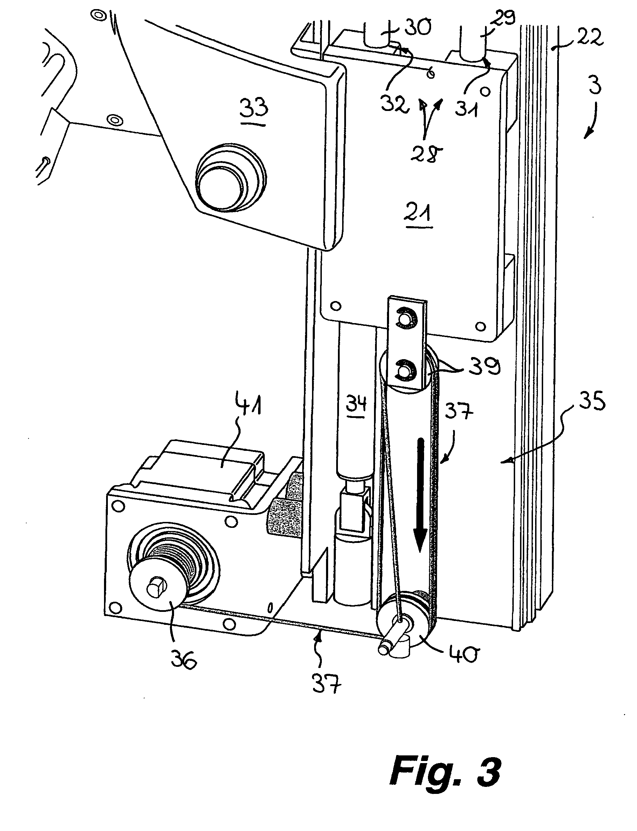

In Figur 3 ist erkennbar, dass das Seil 37 der Seilwinde 35 über einen Flaschenzug 38 geführt ist, welcher Flaschenzug 38 voneinander beabstandete Umlenkrollen 39, 40 hat. Der Flaschenzug 38 weist hier eine Übersetzung auf. Die Seilwinde 35 hat einen Schrittmotor als elektrischen Antrieb 41. Da dieser Schrittmotor ein vergleichsweise hohes Drehmoment hat, ist ein zusätzliches Getriebe überflüssig. Da die Antriebswelle des elektrischen Antriebs 41 bei abgeschaltetem Motor nahezu momentfrei ist, kann auch bei einer Stromunterbrechung eine sichere Notabschaltung gewährleistet werden, indem die wenigstens eine als Rückstellkraft dienende Gasdruckfeder 34 den Schlitten 21 in die obere Hebeposition bewegt. Dabei drückt die zumindest eine Gasdruckfeder 34 den Schlitten 21 in der oberen Hebeposition gegen einen oberen Endanschlag. Mit Hilfe eines einstellbaren unteren Anschlages kann die Eintauchtiefe des Verdampfungsgefäßes 5 im Heizbad des Temperiergefäßes 10 in Abhängigkeit von der Größe und Füllmenge des gewählten Verdampfungsgefäßes 5 eingestellt werden. Mit Hilfe der Schrittsteuerung des elektrischen Antriebes 41 lässt sich der Schlitten 21 in jeder gewünschten Hubposition verfahren. Dabei dient der Schrittsteuerung des elektrischen Antriebes 41 der obere Endanschlag als Referenz.

Der durch die Seilwinde 35, den elektrischen Antrieb 41 und den Flaschenzug 38 gebildete Hubmechanismus, der zu Beginn und Ende des Prozesses dem Absenken und Ausheben des Verdampfungsgefäßes 5 sowie der Feineinstellung seiner Eintauchtiefe im Heizbad dient, zeichnet sich durch einen vergleichsweise langen Hubweg aus, der auch bei der Verwendung großer Verdampfungsgefäße 5 deren vollständiges Ausheben aus dem Temperiergefäß 10 sicherstellt. Die Drehzahl des der Seilwinde 35 zugeordneten elektrisehen Antriebes 41 ist variabel und weist zumindest zwei Drehzahlstufen auf. Während eine hohe Drehzahl eine hohe Fahrgeschwindigkeit des Schlittens 21 zum raschen Absenken oder Ausheben des Verdampfungsgefäßes 5 sicherstellt, wird mit einer demgegenüber geringeren Drehzahl eine niedrigere Geschwindigkeit des Schlittens 21 erreicht, die zur Feineinstellung der Eintauchtiefe des Verdampfungsgefäßes 5 bestimmt ist.

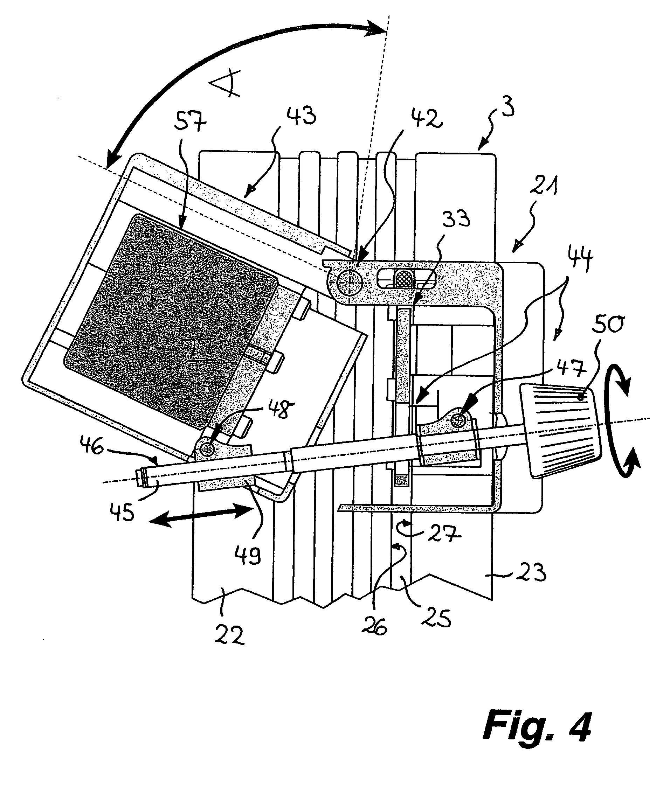

Aus Figur 4 wird deutlich, dass der Schlitten 21 hier Bestandteil einer Halterung ist, die zur Befestigung des Glasaufbaus 4 am Schlitten 21 dient. Der in den Figuren 1 und 6 näher dargestellte Glasaufbau 4 und insbesondere dessen Verdampfungsgefäß 5 ist an der Halterung um eine horizontale Schwenkachse 42 verschwenkbar gehalten. Die Halterung weist dazu ein hier als Schlitten 21 ausgebildetes Halteteil auf, an dem ein mit dem Verdampfungsgerät 5 verbindbares Trageteil 43 um die horizontale Schwenkachse 42 verschwenkbar gehalten ist. Zum Einstellen und Festlegen der gewählten Schwenkposition ist ein Spindeltrieb 44 vorgesehen, der eine Stellspindel 45 mit selbsthemmendem Spindelgewinde 46 hat. Durch Drehen an dieser Stellspindel 45 kann der Schwenkwinkel zwischen dem als Schlitten 21 ausgebildeten Halteteil und dem Trageteil 43 der Halterung verändert und die Schwenkposition eines am Trageteil 43 befestigten Verdampfungsgefäßes 5 variiert werden. Da die Stellspindel 45 ein selbsthemmendes Spindelgewinde 46 hat, ist eine zusätzliche und gegebenenfalls auch versehentlich gelöste Sicherung nicht notwendig. Der Spindeltrieb 44 erlaubt es, den Rotationsverdampfer 1 an die unterschiedlichen Abmessungen der verschiedenen Verdampfungsgefäße anzupassen. Das Trageteil 43 der Halterung trägt den gesamten Glasaufbau 4, dessen Schwerpunkt weit außermittig liegt. Ohne die Selbsthemmung des Spindelgewindes 46 bestände die Gefahr, dass der Glasaufbau beim Lösen einer alternativen Arretierung ungebremst in den unteren Anschlag fällt und bricht, wobei bei dem unter Vakuum stehenden Glasaufbau zusätzlich eine Implusionsgefahr bestehen könnte.

In Figur 4 ist erkennbar, dass die Stellspindel 45 an dem als Schlitten 21 ausgebildeten Halteteil und am Trageteil 43 vorzugsweise um eine horizontale Schwenkachse 47, 48 verschwenkbar gehalten ist. Die Stellspindel 45, die an dem als Schlitten 21 ausgebildeten Halteteil schwenkbar, aber in axialer Richtung unverrückbar gelagert ist, wirkt mit einer Spindelmutter 49 zusammen, die am Trageteil 43 um die Schwenkachse 48 verschwenkbar gehalten ist. An ihrem einen Spindelende weist die Stellspindel 45 ein Stellrad 50 auf, das als Handhabe dient. Über die Auswahl des Gewindetyps des Stellgewindes 46 und der Steigung können Verstellgeschwindigkeit und Kraftaufwand optimiert werden. Da das Stellgewinde 46 selbsthemmend ausgebildet ist, ist keine weitere Arretierung erforderlich, die andernfalls beim Lösen die Gefahr in sich birgt, dass der Glasaufbau versehentlich in den Anschlag fällt und bricht. Der Spindeltrieb 44, mit dem der Kippwinkel des Verdampfungsgefäßes 5 stufenlos verändert werden kann, ist am Stellrad 50 auch mit nur einer Hand betätigbar. In Verbindung mit der variablen Eintauchtiefe des Verdampfungsgefäßes 5 in das Temperiergefäß 10 und der weiter unten noch näher beschriebenen Verschiebbarkeit des Temperiergefäßes 10 erlaubt die in Figur 4 gezeigte Schwenkmechanik, dass ein breites Spektrum unterschiedlich großer Verdampfungsgefäße 5 bei veränderlicher Füllmenge eingesetzt werden kann.

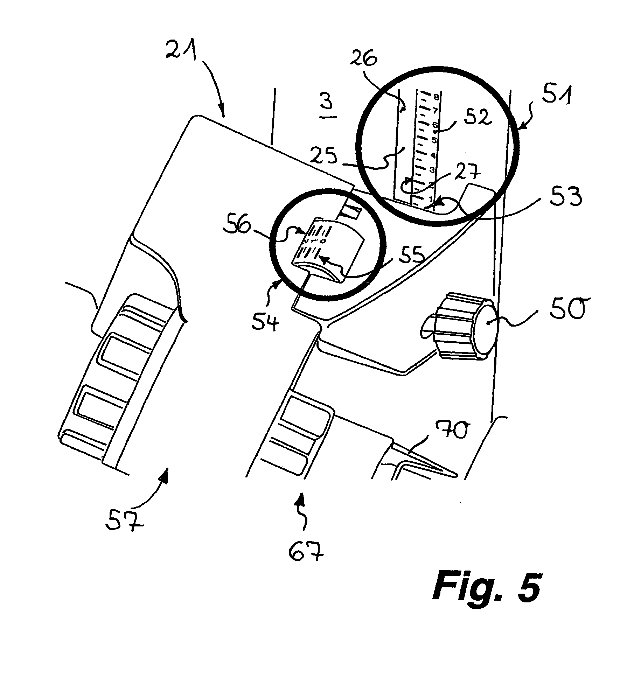

Aus einem Vergleich der Figuren 1 und 5 wird deutlich, dass der am Führungsturm 3 in vertikaler Richtung verfahrbare Schlitten 21 mittels einer Skalierung 51 positionierbar ist, die eine am Außenumfang des Führungsturmes 3 vorgesehene Skala 52 aufweist, welche mit einer am Schlitten 21 befindlichen Anzeige zusammenwirkt. Während die Skala 52 an dem zum Führungsschlitz 25 hin benachbarten außenseitigen Wandungsrandbereich des Führungsturmes 3 angeordnet ist, dient die benachbarte Kante 53 des Schlittens 21 als Anzeige der jeweiligen Hubhöhe.

Zum Positionieren des Trageteiles 43 ist eine weitere Skalierung 54 vorgesehen, die zwischen dem als Halteteil dienenden Schlitten 21 und dem Trageteil 43 vorgesehen ist. Auch diese Skalierung 54 weist eine Skala 55 auf, die hier am Schlitten 21 vorgesehen ist. Dieser Skala 55 ist eine Anzeige zugeordnet, die am Trageteil 43 angeordnet ist. Die Anzeige ist hier durch die benachbarte Kante 56 des Trageteils 43 gebildet. Mit Hilfe der Skalierung 54 lässt sich der jeweilige Schwenkwinkel des mittels der Halterung am Führungsturm 3 gehaltenen Glasaufbaus 4 messen. Die Skalierungen 51, 54 erleichtern die Reproduzierbarkeit eines Versuchsaufbaus wesentlich und begünstigen die einfache Handhabung des hier dargestellten Rotationsverdampfers 1.

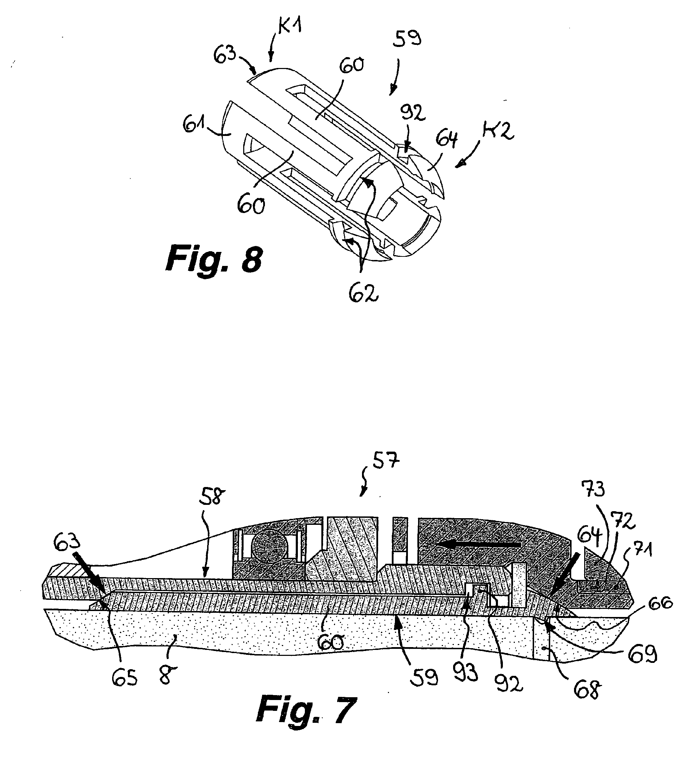

In Figur 6 ist der Rotationsverdampfer 1 in einem Detail-Längsschnitt im Bereich seines am Trageteil 43 der Halterung vorgesehenen Rotationsantriebes 57 dargestellt. Der Rotationsantrieb 57 weist eine Nabe 58 auf, die mittels eines elektrischen Antriebsmotors drehantreibbar ist. Der nicht weiter gezeigte Antriebsmotor des Rotationsantriebs 57 ist hier als bürstenloser Gleichstrommotor mit Zahnriemen-Übersetzung ausgestaltet. Um die Rotationsbewegung der Nabe 58 auf die das Verdampfungsgefäß 5 tragende Glashohlwelle 8 übertragen zu können, ist auf diese Glashohlwelle 8 der in den Figuren 7 und 8 näher dargestellte Klemmeinsatz 59 aufgeschoben. Der zum Verklemmen der Glashohlwelle 8 in der Nabe 58 bestimmte Klemmeinsatz 59 hat eine hülsenartige Grundform. Der Klemmeinsatz 59 weist dazu in Längsrichtung orientierte Stützstäbe 60 auf, die über in Umfangsrichtung des Klemmeinsatzes 59 orientierte Verbindungsstege 61, 62 miteinander verbunden sind. Die Verbindungsstege 61, 62 verbinden wechselweise die auf der einen oder die auf der anderen Seite des Klemmeinsatzes 59 angeordneten Stegenden benachbarter Stützstege 60 derart, dass ein jeder Stützsteg 60 mit seinem einen benachbarten Stützsteg über einen, auf der einen Seite des Klemmeinsatzes 59 angeordneten und in die eine Umfangsrichtung abstehenden Verbindungssteg 61 verbunden ist, während er mit dem anderen benachbarten Stützsteg über einen auf der anderen Seite des Klemmeinsatzes 59 gelegenen und in die entgegengesetzte Umfangsrichtung abstehenden Verbindungssteg 62 verbunden ist. Dabei bilden die an den gegenüberliegenden Enden des Klemmeinsatzes 59 vorgesehene Verbindungsstege 61, 62 voneinander beabstandete Klemmabschnitte K1 und K2 des Klemmeinsatzes 59. Die die Klemmabschnitte K1 und K2 bildenden Verbindungsstege 61, 62 verjüngen sich zu den freien Enden des Klemmeinsatzes 59 hin derart, dass die Klemmabschnitte K1 und K2 jeweils zumindest eine relativ zur Längsachse des Klemmeinsatzes 59 abgeschrägte Klemmschräge 63, 64 tragen, die mit ihnen zugeordneten Gegenschrägen 65 beziehungsweise 66 des Rotationsantriebes 1 in der Weise zusammenwirken, dass die Klemmabschnitte K1 und K2 durch axiale Druckbeaufschlagung des Klemmeinsatzes 59 gegen die Glashohlwelle 8 gedrückt werden. Da der Klemmeinsatz 59 durch die Stützstege 60 und die wechselweise an den gegenüberliegenden Endbereichen der Stützstege 60 vorgesehenen Verbindungsstege 61, 62 eine schlaufenförmige oder meanderförmige Außenkontur hat und da sich diese Außenkontur des Klemmeinsatzes 59 bei Bedarf auf einfache Weise im Umfang weiten lässt, kann der Klemmeinsatz 59 bequem auf der Glashohlwelle 8 positioniert werden.

Aus Figur 6 und dem Detail-Längsschnitt in Figur 7, der den mit VII gekennzeichneten Bereich in Figur 6 zeigt, wird deutlich, dass der Klemmeinsatz 59 von der dem Verdampfungsgefäß 5 zugewandten Seite der Nabe 58 aus in diese bis zu einem als Gegenschräge 65 ausgebildeten Ringabsatz am Innenumfang der Nabe 58 einsetzbar ist, und dass zur axialen Druckbeaufschlagung des Klemmeinsatzes 59 auf die Nabe 58 ein Spannschraubring 67 lösbar aufschraubbar ist, der den über die Nabe 58 vorstehenden Klemmabschnitt K2 des Klemmeinsatzes 59 mit einer am Innenumfang des Spannschraubringes 67 vorgesehenen Gegenschräge 66 beaufschlagt.

Da der Klemmeinsatz 59 durch die Stützstege 60 und die wechselweise an den gegenüberliegenden Endbereichen des Klemmeinsatzes 59 vorgesehenen Verbindungsstege 61, 62 eine schlaufenförmige oder meanderförmige Außenkontur hat und da sich diese Außenkontur des Klemmeinsatzes 59 bei Bedarf auf einfache Weise im Umfang weiten lässt, kann der Klemmeinsatz 59 bequem auf der Glashohlwelle 8 positioniert werden. Die Flexibilität des Klemmeinsatzes 59 wird durch die axial verlaufenden schmalen Stützstege 60 und die sie verbindenden verbindungsstege 61, 62 erreicht. In den Bereichen der Kraftübertragung, nämlich in den Klemmabschnitten K1 und K2, ist der Klemmabschnitt 59 dagegen großflächig ausgeführt, um eine flächige Klemmung der als Dampfdurchführung dienenden Glashohlwelle 8 zu erreichen. Der entstehende Reibschluss fixiert die Glashohlwelle 8 spielfrei in der Nabe 58 des Rotationsantriebes 57. Am Außenumfang des Klemmeinsatzes 59 ist eine hier als (unterbrochener) Ringflansch ausgebildete umlaufende Nase 92 vorgesehen, die in eine Ringnut 93 am Innenumfang der Nabe 58 eingreift und den Klemmeinsatz 59 axial in der Nabe 58 sichert. Bei der Demontage der Glashohlwelle 8 verbleibt der Klemmeinsatz 59 somit in der Nabe 58 und lediglich der Spannschraubring 67 ist gelöst und muß nicht entfernt werden, um die Glashohlwelle 8 aus der Nabe 58 des Rotationsantriebes 57 zu entfernen.

In den Figuren 6 und 7 ist erkennbar, dass die Glashohlwelle 8 an ihrem Außenumfang eine als Ringnut ausgebildete Einformung 68 trägt, der eine als Ringwulst ausgebildete Ausformung 69 am Innenumfang des Klemmeinsatzes 59 zugeordnet ist. Da die am Klemmeinsatz 59 vorgesehene Ausformung 69 in dem über die Nabe 58 überstehenden Teilbereich des Klemmeinsatzes 59 und insbesondere am Innenumfang des über die Nabe 58 vorstehenden Klemmabschnitts K2 angeordnet ist, lässt sich die Glashohlwelle 8 auch nachträglich noch in den in der Nabe 58 befindlichen Klemmeinsatz 59 einschieben oder dort herausziehen, wenn beispielsweise ein Austausch des Verdampfungsgefäßes 5 auch einen Wechsel der Glashohlwelle 8 erfordert.

In Figur 6 wird deutlich, dass die als Dampfdurchführung dienende Glashohlwelle 8 durch die Nabe 58 des Rotationsantriebs 57 hindurch gesteckt und über den Klemmeinsatz 59, der sich zwischen der Nabe 58 und der Glashohlwelle 8 befindet, in der Nabe 58 verklemmt ist, so dass eine Rotation der Nabe 58 des Rotationsantriebs 57 um eine Längsachse der Nabe 58 zu einer entsprechenden Rotation des Klemmeinsatzes 59, der Glashohlwelle 8 und des mit der Glashohlwelle 8 drehfest verbundenen Verdampfungsgefäßes 5 führt. Die Nabe 58, der Klemmeinsatz 59 und die Glashohlwelle 8 sind konzentrisch zueinander angeordnet. Die drehfeste Verbindung zwischen der Glashohlwelle 8 und dem Verdampfungsgefäß 5 wird durch eine Schliffverbindung gewährleistet, die vorzugsweise als Kegelschliffverbindung ausgeführt ist, bei der die Glashohlwelle 8 mit ihrer dem Verdampfungsgefäß 5 zugewandten Seite, an der ein Schliffkern 94 ausgebildet ist, in eine an einem Gefäßhals des Verdampfungsgefäßes 5 ausgebildete Schliffhülse eingreift. Zur Sicherung der Schliffverbindung zwischen der Glashohlwelle 8 und dem Verdampfungsgefäß 5 kann eine zusätzliche Schliffklemme 70 (vgl. Fig. 1) vorgesehen sein.

In Figur 6 ist erkennbar, dass der Spannschraubring 67 ein Gewinde 71 trägt, das mit einem Gegengewinde 72 an einem Abdrückschraubring 73 zusammenwirkt. Beim Losschrauben des Abdrückschraubringes 73 vom Spannschraubring 67 drückt der Abdrückschraubring 73 derart auf das Verdampfungsgefäß 5 und dessen Gefäßhals, dass die Klemm- oder Schliffverbindung zwischen dem Verdampfungsgefäß 5 und der das Verdampfungsgefäß 5 tragenden Glashohlwelle 8 gelöst wird.

Die als Dampfdurchführung ausgebildete Glashohlwelle 8 reicht mit ihrem dem Verdampfungsgefäß 5 abgewandten Wellenende in die Anschlussöffnung 74 des zu dem Kühler 6 führenden Anschlussstutzens 9 hinein und ist gegenüber diesem Anschlussstutzen 9 mit einer, in den Figuren 6, 9 und 10 näher dargestellten Gleitringdichtung abgedichtet. Diese Gleitringdichtung wird durch einen Dichtring 76 gebildet, der zwischen dem Anschlussstutzen 9 und einem Antriebsgehäuse 77 des Rotationsantriebs 57 eingespannt ist und an der rotierenden Glashohlwelle 8 dichtend anliegt. Der Dichtring 76 ist als Ringscheibe ausgebildet, deren äußere Ringzone 78 als Einspannrand dient. Die Ringscheibe weist eine in Längserstreckung der Glashohlwelle 8 umgebogene Ringzone 79 auf, damit der Dichtring 76 mit einem in Längsrichtung der Glashohlwelle orientierten Teilbereich T der Ringscheibe dichtend anliegt. Dabei liegt der in Längsrichtung der Glashohlwelle 8 orientierte Teilbereich T der Ringscheibe federelastisch an der Glashohlwelle 8 an, so dass eine stets gleichbleibend gute und dauerhafte Abdichtung in diesem Bereich sichergestellt ist. Der Dichtring 76 ist einstückig ausgebildet und mit geringem Aufwand als Materialcompound herstellbar. Dabei wird ein Tefloncompound bevorzugt, der sich durch einen geringen Reibungskoeffizienten und einem reduzierten Verschleiß auszeichnet.

Der Dichtring 76, der in Längsschnitt j- oder u-förmig ausgestaltet ist und dessen die Ringöffnung begrenzender Innenrand 95 in eine der Glashohlwelle 8 abgewandte Richtung nach außen gebogen sein kann, weist an seinem Einspannrand zumindest eine Ringnut 80 auf, dem ein komplementärer Ringwulst 81 am benachbarten Stirnrand des Antriebsgehäuses 77 zugeordnet sein kann.

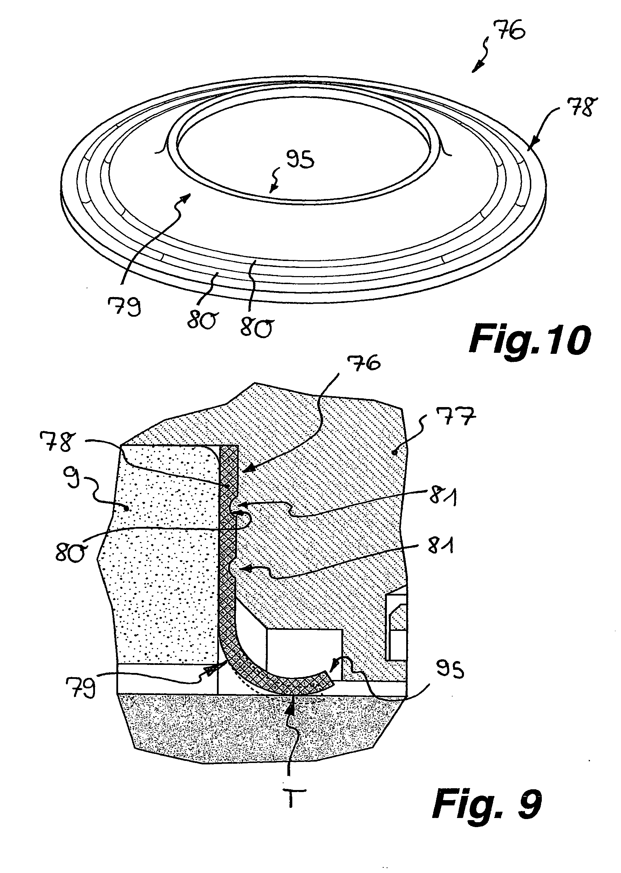

Durch ein Vergleich der in Fig. 9 zum einen in durchgezogenen Linien und zum anderen in gestrichelten Linien dargestellten inneren Ringzone 79 ist angedeutet, dass diese Ringzone 79 derart in Richtung zur Glashohlwelle 8 unter Vorspannung anliegt, dass dadurch eine automatische Nachstellung des an der Glashohlwelle 8 anliegenden Dichtringes 76 bei Abnutzung erfolgt.

Der Klemmeinsatz 59 ist vorzugsweise als Kunststoffteil und insbesondere als Kunststoffspritzgussteil ausgebildet. Da im Bereich der inneren Ringzonen 79 des Dichtringes 76 das Glas der Glashohlwelle 9, der insbesondere aus Kunststoff hergestellte Klemmeinsatz 59 und die vorzugsweise metallene Nabe 58 des Rotationsantriebs 57 unter Pressdruck aneinander anliegen, stellt eine solche Materialwahl diese Einzelteile 9, 59, 58 die ideale Kombination zwischen Weichheit, Steifigkeit und Reibschlüssigkeit dieser miteinander rotierenden Einzelteile dar.

Dem Rotationsantrieb 57 ist eine nicht weiter dargestellte Motorsteuerung zugeordnet, die vorzugsweise eine stufenlose Drehzahleinstellung insbesondere mit der Möglichkeit zur Drehrichtungsumkehr hat. Zur Vermeidung des Anhaftens von festen Rückständen an der Gefäßinnenwand, insbesondere während eines Trocknungsprozesses, kann ein Betriebmodus sinnvoll sein, der eine periodische Drehrichtungsumkehr vorsieht. Um bei einer Blockade der Rotationsbewegung eine Sicherheitsabschaltung des Rotationsverdampfers 1 zu bewirken, ist eine Überwachung des Motorstroms vorgesehen. Zur Beginn der Rotationsbewegung ist ein Sanftanlauf des Rotationsantriebes 57 vorgesehen, wozu in dessen Motorsteuerung eine entsprechende Anlaufkennlinie hinterlegt ist, die beispielsweise eine Begrenzung des Motorstromes vorsehen kann.

Das Temperiergefäß 10 dient der Temperierung des im Temperiergefäß 10 befindlichen Flüssigkeitsbades und insbesondere der kontrollierten Wärmezufuhr in das Verdampfungsgefäß 5. Das Temperiergefäß 10 weist dazu eine elektrische Temperiereinrichtung und insbesondere eine elektrische Heizeinrichtung auf. Das als Temperierflüssigkeit verwendete Öl oder Wasser wird durch die Rotation des Verdampfungsgefäßes 5 derart umgewälzt, dass eine homogene Temperaturverteilung sichergestellt ist. Die Trägheit der Badtemperatur stabilisiert die Heiztemperatur bei Einsetzen des Siedens im Verdampfungsgefäß 5 (Verdampfungskälte).

Um das Temperiergefäß 10 einfach befüllen und entleeren zu können, ist das Temperiergefäß 10 lösbar auf den Geräteständer 2 des Rotationsverdampfers aufgesetzt. Der Geräteständer 2 ist ausreichend standsicher, um ein Umkippen des Rotationsverdampfers 1 auch bei entferntem Temperiergefäß 10 auszuschließen. Am Geräteständer 2 oder am Temperiergefäß 10 ist zumindest ein Positioniervorsprung vorgesehen, der mit einer zugeordneten Positioniereinformung am Temperiergefäß 10 beziehungsweise am Geräteständer 2 zusammenwirkt. Der Rotationsverdampfer 1 weist vorzugsweise zwei solcher, mit jeweils einer Positioniereinformung zusammenwirkender, beispielsweise zapfenartig vorstehender Positioniervorsprünge auf, von denen der eine zur elektrischen Kontaktierung der im Temperiergefäß 10 vorgesehenen Temperiereinrichtung mit einem elektrischen Anschluss am Geräteständer und von denen der andere Positioniervorsprung zur Kontaktierung der Signalverbindung zwischen dem Rotationsverdampfer 1 und einem in das Temperiergefäß 10 integrierten Temperatursensor bestimmt ist.

Im Bereich von Positioniervorsprung und Positioniereinformung, die etwa achsparallel zur Rotationsachse des Rotationsantriebes 57 verfahrbar sind, ist eine elektrische Kupplung angeordnet, die zum elektrischen Kontaktieren der im Temperiergefäß vorgesehenen Temperiereinrichtung mit einem elektrischen Anschluss am Geräteständer bestimmt ist. Um die Position des Verdampfungsgefäßes 5 relativ zum Geräteständer 2 variieren und um unterschiedlich große Verdampfungsgefäße 5 im Rotationsverdampfer 1 einsetzen zu können, ist der wenigstens eine, am Geräteständer 2 vorgesehene Positioniervorsprung oder die Posi-tioniereinformung daran mittels einer hier nicht weiter dargestellten Schiebeführung verfahrbar gehalten. Diese Schiebeführung hat zumindest zwei teleskopartig ineinander geführte Schiebeteile, von denen ein Schiebeteil am Geräteständer 2 unverrückbar gehalten ist, und von denen ein anderes Schiebeteil den zumindest einen Positioniervorsprung oder die wenigstens eine Positioniereinformung trägt.

Aus Figur 1 wird deutlich, dass das Temperiergefäß 10 zumindest in seinem lichten Innenquerschnitt und vorzugsweise auch in seinem Außenquerschnitt eine etwa dreieckige Grundform aufweist. Um einem Schwappen der im Temperiergefäß 10 befindlichen Temperierflüssigkeit im Betrieb und beim Transport des Temperiergefäßes 10 entgegenzuwirken, weist das Temperiergefäß 10 mit Ausnahme im Bereich einer Ausgießtülle 87 vertikal orientierte, das heißt weitgehend senkrechte Gefäß-Innenwände 88 auf. Die Ausgießtülle 87 ist in Verlängerung der Scheitellinie 75 der dreieckigen Grundform vorgesehen, wobei die Scheitellinie 75 in die dem Verdampfungsgefäß 5 zugewandte Richtung orientiert ist. Am Außenumfang des Temperiergefäßes 10 sind ergonomische Griffmulden vorgesehen, an denen sich das Temperiergefäß bequem ergreifen lässt. Eine vorzugsweise an zumindest einer der Gefäß-Innenwände 88 vorgesehene Skala zeigt die Füllhöhe der Temperierflüssigkeit an. Da das Temperiergefäß 10 entlang der Rotationsachse verschiebbar ist, ist ein großes Spektrum von Verdampfungsgefäßen einsetzbar. Auch größere Verdampfungsgefäße 5 können im Temperiergefäß 10 eintauchen, weil dies entsprechend tief ausgestaltet ist. Auf dem Temperiergefäß 10 ist eine transparente Abdeckhaube 89 aufsetzbar. Die Abdeckhaube 89 weist wenigstens ein, auf dem oberen Schmalrand des Temperiergefäßes 10 absetzbares erstes Haubenteil 90 auf, an dem mindestens ein zweites Haubenteil 91 verschwenkbar oder aufklappbar gehalten ist. Da das während des Betriebes meist unter Vakuum stehende Verdampfungsgefäß 5 zum Zwecke eines verbesserten Wärmeübergangs im Flüssigkeitsbad aus unbeschichtetem Glas hergestellt ist und da vorzugsweise nur die übrigen Komponenten des Glasaufbaus 4 aus bruchfestem oder als Splitterschutz beschichtetem Glas bestehen, dient die Abdeckhaube 89 als Splitterschutz.

Das Temperiergefäß 10 weist einen Füllstandsensor auf, der mit einer Dosierpumpe in Steuerverbindung steht, die mit einem Temperierflüssigkeitsvorrat verbunden ist. Der Füllstandsensor ist Bestandteil einer Füllstandsüberwachung, die bei Unterschreiten eines Temperierflüssigkeits-Minimums eine Notabschaltung bewirkt. Der Füllstandsensor kann zusätzlich oder stattdessen auch Bestandteil einer Füllstandsregelung sein, die zur Kompensation von Verdunstungsverlusten bestimmt ist.

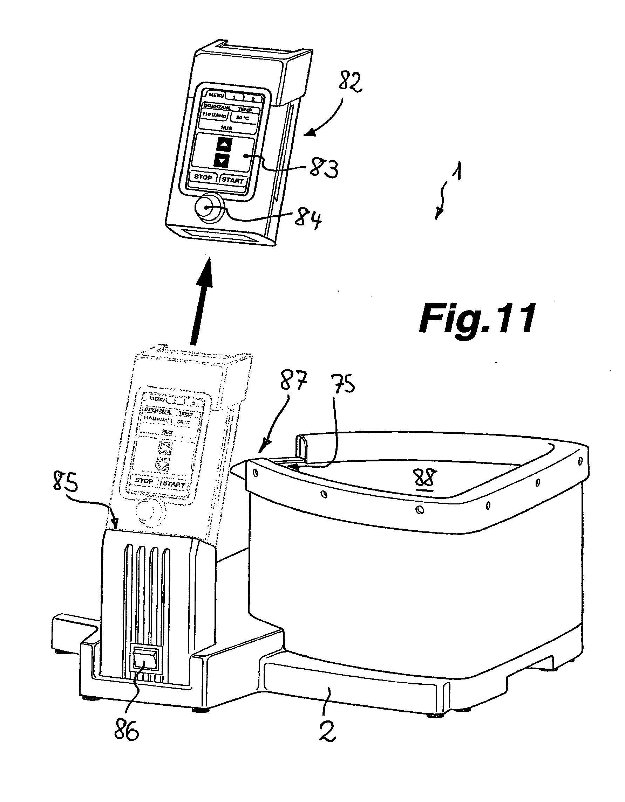

Aus einem Vergleich der Figuren 1 und 11 wird deutlich, dass die Bedienung des Rotationsverdampfers 1 über eine zentrale Bedienungseinheit 82 erfolgt, die einen direkten Zugriff auf alle technischen Funktionalitäten und somit u.a. auch auf Rotationsantrieb 57, Hubantrieb und die im Temperiergefäß 10 vorgesehene Temperiereinrichtung ermöglicht.

Um den Rotationsverdampfer 1 auch bedienen zu können, wenn sich dieser geschützt beispielsweise in einem Abzug befindet, ist die Bedienungseinheit 82 als eine vom Rotationsverdampfer 1 lösbare und vorzugsweise drahtlose Fernbedienungseinheit ausgebildet. Eine Datenübertragungsschnittstelle, die beispielsweise als USB-Schnittstelle ausgebildet sein kann, erlaubt die Prozesssteuerung und/oder die Dokumentation der Prozessparameter an einer externen Datenverarbeitungsanlage und insbesondere am PC. Die als drahtlose Fernbedienung verwendbare Fernbedienungseinheit 82 weist ein Display 83 auf, das vorzugsweise als Touch-Screen mit intuitiven, an den Betriebsmodus angepassten Bedienelementen ausgestaltet ist. An der Bedienungseinheit 82 ist ein hier als Druck- und Drehknopf ausgebildeter Bedienknopf 84 als weiteres Bedienelement vorgesehen, das beispielsweise zur Eingabe von Zahlenwerten genutzt werden kann.

Am Rotationsverdampfer 1 ist eine Konsole oder Ablage 85 für die Bedienungseinheit 82 vorgesehen, die bei abgelegter Bedienungseinheit 82 eine optimale Bedienhöhe der Bedienelemente und des Displays 83 sicherstellt und die dazu über den Geräteständer 4 vorsteht. Der erfindungsgemäße Rotationsverdampfer kann wahlweise entweder mit der auf der Konsole 85 befindlichen Fernbedienungseinheit 82 unmittelbar bedient oder über die Fernbedienungseinheit 82 auch mit Abstand betätigt werden. Ein Netzschalter 86, der auch als Not-Aus verwendbar ist, ist gut erreichbar auf der Vorderseite des Rotationsverdampfers 1 angeordnet.

Das als Touch-Screen ausgestaltete Display 83 dient beispielsweise zur Anzeige der Ist-Temperatur im Flüssigkeitsbad, der Soll-Temperatur der in das Temperiergefäß 10 integrierten Temperiereinrichtung, der Drehzahl des Rotationsantriebes oder zur Anzeige vergleichbarer Prozessparameter. Um die auf dem Display 83 ersichtlichen Kontrollfunktionen auswählen und/oder die Prozessparameter verändern zu können, kann zusätzlich oder stattdessen auch der Bedienknopf 84 verwendet werden. Um die Bedienung der vorzugsweise im Rotationsverdampfer 1 befindlichen Steuerungseinrichtung, die auch die Motorsteuerung für den Rotationsantrieb 57 umfassen kann, möglichst einfach zu gestalten, sind einzelne Funktionen der Steuerungseinrichtung in einer auf dem Display 83 darstellbaren Menüstruktur angeordnet, wobei das Blättern durch die einzelnen Menüs mittels dem Bedienknopf 84 und/oder dem gegebenenfalls als Touch-Screen ausgebildeten Display 83 erfolgt.

Die am Rotationsverdampfer 1 über dessen Geräteständer 4 vorstehende Ablage oder Konsole 85 ist zur Auflage oder Ablage der Fernbedienungseinheit 82 vorgesehen. Die Ablage oder Konsole 85 hat zumindest ein mit der Bedienungseinheit 82 lösbar verbindbares Kontaktsystem, das für die Stromzuführung zum Ladesystem für die in der Bedienungseinheit 82 befindlichen Akkus und vorzugsweise auch zur Leiter-basierten Steuerverbindung zwischen dem wenigstens einen Bedienelement 83, 84 der Bedienungseinheit 82 und der Steuerungseinrichtung unter Ausschaltung der drahtlosen Steuerverbindung aufweist. Liegt die Bedienungseinheit 82 auf der Ablage oder Konsole 85 auf, wird die drahtlose Steuerbindung vorläufig eingestellt zu Gunsten einer Leiter-basierten Steuerverbindung zwischen dem wenigstens einen, an der Bedienungseinheit 82 vorgesehenen Bedienelement 83, 84 und der Steuerungseinrichtung.

Die Steuerungseinrichtung des Rotationsverdampfers 1 weist auch eine Not-Aus-Funktion auf, deren Auslösen die Stromzufuhr zur Temperiereinrichtung im Temperiergefäß 10 unterbricht und die Hochfahrbewegung des am Führungsturm 3 verfahrbar gehaltenen Glasaufbaus 4 in die Ruheposition auslöst. Dabei kann die in der Steuerungsseinrichtung abgespeicherte Not-Aus-Funktion beispielsweise manuell an einem speziellen Not-Aus-Schalter an der Bedienungseinheit 82 oder am Netzschalter 86 des Rotationsverdampfers 1 oder auch automatisch ausgelöst werden, wenn die Bedienungseinheit 82 nicht mehr mit Strom versorgt wird oder die drahtlose Steuerverbindung zwischen der Fernbedienungseinheit 82 und dem Rotationsverdampfer 1 unterbrochen wird. Da die Stromzufuhr zur Temperiereinrichtung im Temperiergefäß 10 unterbrochen wird, ist ein weiteres unkontrolliertes Aufheizen des Versuchaufbaus nicht zu befürchten. Da auch das Verdampfungsgefäß 5 aus der im Flüssigkeitsbad befindlichen Betriebsstellung in die außerhalb des Temperiergefäßes 10 vorgesehene Ruheposition verfahren wird, kann die im Verdampfungsgefäß 10 befindliche Flüssigkeit nicht unbeabsichtigt durch die im Flüssigkeitsbad befindliche Restwärme aufgeheizt werden.

Auf dem Display 83 der Bedienungseinheit 82 ist beispielsweise auch die Ist-Temperatur der im Temperiergefäß 10 befindlichen Temperierflüssigkeit ablesbar. Über das als Touch-Screen ausgebildete Display 83 und/oder den Bedienknopf 84 kann die benötigte Soll-Temperatur der im Temperiergefäß 10 befindlichen Temperierflüssigkeit vorgegeben werden. Auf gleiche Weise ist in die Steuerungseinrichtung auch eine Drehrichtungsänderung des Rotationsantriebs 57 vorzugsweise in vorwählbaren Zeitabständen vorgebbar. Über die Bedienungseinheit 82 kann schließlich auch vorgegeben werden, wie weit das Verdampfungsgefäß 5 des Glasaufbaus 4 am Führungsturm 3 heruntergefahren werden soll, wobei durch Drehen am Bedienknopf 84 auch eine Feinjustierung der Eintauchtiefe des Verdampfungsgefäßes 5 im Temperiergefäß 10 möglich sein kann.

Durch das Erwärmen des Verdampfungsgefäßes 5 im Flüssigkeitsbad des Temperiergefäßes 10 verdampft die im Verdampfungsgefäß 5 befindliche Lösung und der Dampf strömt durch die als Dampfdurchführung dienende Glashohlwelle 8 in den zum Kühler 6 führenden Anschlussstutzen 9. Im Kühler 6 kann der Dampf kondensieren und in das Auffanggefäß 7 abfließen. Eine Abtrennung von Stoffbestandteilen wird dadurch erreicht, dass sich deren Siedepunkte unterscheiden, so dass bei einer vorgegebenen Temperatur bestimmte Stoffe verdampfen können, während andere Stoffe vorerst noch im Verdampfungsgefäß verbleiben. Durch Anlegen eines Vakuums an dem Glasaufbau 4 kann die Siedetemperatur gesenkt werden, wodurch höhersiedende Lösungsmittel bei geringerer Temperatur verdampft werden können, als es bei Normaldruck der Fall wäre. In dem unter Vakuum stehenden Glasaufbau 4 lassen sich auch Substanzen destillieren, die temperaturempfindlich sind. Durch das Arbeiten bei geringerer Siedetemperatur kann eine Zersetzung solcher temperaturempfindlicher Substanzen verhindert werden. Der als Gleitringdichtung dienende Dichtring 76 dichtet dabei die rotierende Glashohlwelle 8 gegen den Atmosphärendruck ab und sorgt so für die Aufrechterhaltung des Vakuums im Inneren des Glasaufbaus 4. Da der Innendurchmesser des Dichtringes 76 etwas kleiner als der Durchmesser der Glashohlwelle 8 in diesem Bereich ist, ergibt sich eine Vorspannung des Dichtringes 76, die durch die am Dichtring anliegende Druckdifferenz weiter erhöht wird. Bei Abnutzung des Dichtringes 76 durch Abrieb stellt sich die Gleitringdichtung aufgrund der Vorspannung des Dichtringes 76 selbst nach. Die am Antriebsgehäuse 77 vorgesehenen Ringwülste 81 drücken den Dichtring ringförmig gegen den Anschlussstutzen 9, und zwar derart, dass die Überhöhung der Flächenpressung entlang dieser beiden geschlossenen Linien zusätzlich für eine optimale Abdichtung sorgt.

Die Beendigung des Verdampfungsprozesses erfolgt durch eine kontrollierte Abschaltung, die unabhängig von der Stromversorgung bei einem Ausheben des Verdampfungsgefäßes 5 aus dem Temperiergefäß 10, bei einem Rotationsstopp des Rotationsantriebes 57, bei einer schlagartigen Aufhebung des im Glasaufbau 4 erzeugten Vakuums oder bei einer Abschaltung der Kühlung des Kühlers 6 erfolgt, wobei dem Kühler 6 hierzu eine Schnittstelle für ein Schaltventil zugeordnet ist. Eine Abschaltung des Rotationsverdampfers 1 und somit eine Beendigung des Verdampfungsprozesses kann durch einen Anwender, durch Erreichen eines vorgegebenen Prozessparameters (Prozessende), einen Prozessfehler oder durch Stromausfall ausgelöst werden.

**Bezugszeichenliste**

| | |
|---|---|
| Rotationsverdampfer 1 | 1 |
| Geräteständer | 2 |
| Führungsturm | 3 |
| Glasaufbau | 4 |
| Verdampfungsgefäß | 5 |
| Kühler | 6 |
| Auffanggefäß | 7 |
| Glashohlwelle | 8 |
| Anschlussstutzen (des Kühlers) | 9 |
| Temperiergefäß | 10 |
| Schlauchanschluß (am Glasaufbau) | 11 |
| Schlauchanschluß (am Glasaufbau) | 12 |
| Schlauchanschluß (am Glasaufbau) | 13 |
| Schlauchleitung (frei verlegt) | 14 |
| Schlauchleitung (frei verlegt) | 15 |
| Schlauchleitung (frei verlegt) | 16 |
| Kanal | 17 |
| Schlauchleitung (im Führungsturm) | 18 |
| Schlauchleitung (im Führungsturm) | 19 |
| Schlauchleitung (im Führungsturm) | 20 |
| Schlitten | 21 |
| Profilabschnitt (Hohlprofil) | 22 |
| Profilabschnitt | 23 |
| Hohlraum (zischen den Profilabschnitten) | 24 |
| Führungsschlitz | 25 |
| Schmalrand (des Profilabschnittes 22) | 26 |
| Schmalrand (des Profilabschnittes 23) | 27 |
| Schlittenführung | 28 |
| Führungsstab (der Schlittenführung 28) | 29 |
| Führungsstab (der Schlittenführung 28) | 30 |
| Führungsloch (im Schlitten 21) | 31 |
| Führungsloch (im Schlitten 21) | 32 |
| Verbindungsarm | 33 |
| Gasdruckfeder | 34 |
| Seilwinde | 35 |
| Seiltrommel | 36 |
| Seil | 37 |
| Flaschenzug | 38 |
| Umlenkrollen (des Flaschenzuges) | 39 |
| Umlenkrollen (des Flaschenzuges) | 40 |
| elektrischer Antrieb (der Seilwinde) | 41 |
| Schwenkachse (der Halterung) | 42 |
| Trageteil (der Halterung) | 43 |
| Spindeltrieb | 44 |
| Stellspindel | 45 |
| Spindelgewinde | 46 |
| Schwenkachse (der Stellspindel am Halteteil) | 47 |
| Schwenkachse (der Spindelmutter) | 48 |
| Spindelmutter | 49 |
| Stellrad | 50 |
| Skalierung (für Hubhöhe) | 51 |
| Skala (der Skalierung 51) | 52 |
| Kante (des Schlittens 21 als Anzeige der Hubhöhe) | 53 |
| Skalierung (für den Schwenkwinkel) | 54 |
| Skala (der Skalierung 54) | 55 |
| Kante (am Tragteil 43 als Anzeige der Skalierung 54) | 56 |
| Rotationsantrieb | 57 |
| Nabe | 58 |
| Klemmeinsatz | 59 |
| Stützstege | 60 |
| Verbindungsstege (links) | 61 |
| Verbindungsstege (rechts) | 62 |
| Klemmschräge (links) | 63 |
| Klemmschräge (rechts) | 64 |
| Gegenschräge (in der Nabe) | 65 |
| Gegenschräge (im Spannschraubring) | 66 |
| Spannschraubring | 67 |
| Einformung | 68 |
| Ausformung | 69 |
| Schliffklemme | 70 |
| Gewinde (am Spannschraubring 67) | 71 |
| Gegengewinde (am Abdrückschraubring) | 72 |
| Abdrückschraubring | 73 |
| Anschlussöffnung (des Anschlussstutzens) | 74 |
| Scheitellinie | 75 |
| Dichtring | 76 |
| Antriebsgehäuse | 77 |
| äußere Ringzone (des Dichtrings) | 78 |
| umgebogene Ringzone (des Dichtringes) | 79 |
| Ringnut (am Dichtring) | 80 |
| Ringwulst (am Stirnrand des Antriebsgehäuses) | 81 |
| (Fern-)Bedienungseinheit | 82 |
| Display | 83 |
| Bedienknopf | 84 |
| Ablage oder Konsole (für Bedienungseinheit) | 85 |
| Netzschalter | 86 |
| Ausgießtülle | 87 |
| Gefäß-Innenwände des Temperiergefäßes | 88 |
| Abdeckhaube | 89 |
| festes Haubenteil | 90 |
| aufklappbares Haubenteil | 91 |
| Nase | 92 |
| Ringnut | 93 |
| Schliffkern | 94 |
| Innenrand | 95 |
| Klemmabschnitt (links) | K1 |
| Klemmabschnitt (rechts) | K2 |
| Teilbereich (des Dichtringes) | T |

## Patentansprüche

1. Rotationsverdampfer (1), umfassend einen Rotationsantrieb (57) mit einer Nabe (58) und einen Klemmeinsatz (59) mit hülsenartiger Grundform zum Verklemmen einer als Glashohlwelle (8) ausgebildeten Dampfdurchführung in der Nabe (58) des Rotationsantriebs (57), wobei der Klemmeinsatz (59) zwei, in Längsrichtung voneinander beabstandete Klemmabschnitte (K1, K2) aufweist, die jeweils zumindest eine relativ zur Längsachse des Klemmeinsatzes (59) abgeschrägte Klemmschräge (63, 64) tragen, die mit ihnen zugeordneten Gegenschrägen (65, 66) des Rotationsantriebes (57) derart zusammenwirken, dass die Klemmabschnitte (K1, K2) durch axiale Druckbeaufschlagung des Klemmeinsatzes (59) gegen die Glashohlwelle (8) gedrückt werden, wobei der Klemmeinsatz (59) in dessen Längsrichtung orientierte Stützstege (60) hat, die über in Umfangsrichtung des Klemmeinsatzes (59) orientierte Verbindungsstege (61, 62) miteinander verbunden sind, und wobei die Stützstege (60) und die Verbindungsstege (61, 62) derart zu der hülsenartigen Grundform des Klemmeinsatzes (59) verbunden sind, **dadurch gekennzeichnet, dass** die Verbindungsstege (61, 62) wechselweise die auf der einen oder die auf der anderen Seite des Klemmeinsatzes (59) angeordneten Stegendbereiche benachbarter Stützstege (60) verbinden, und dass die voneinander beabstandeten Klemmabschnitte (K1, K2) durch die an den gegenüberliegenden Enden des Klemmeinsatzes (59) vorgesehenen und die Klemmschrägen (63, 64) tragenden Verbindungsstege (61, 62) gebildet sind.

2. Rotationsverdampfer nach Anspruch 1, **dadurch gekennzeichnet, dass** die von den an gegenüberliegenden Enden des Klemmeinsatzes (59) vorgesehenen Verbindungsstegen (61, 62) getragenen Klemmschrägen (63, 64) jeweils einen sich zum benachbarten Ende des Klemmeinsatzes (59) verjüngenden Außenquerschnitt haben.

3. Rotationsverdampfer nach Anspruch 1 oder 2, **dadurch gekennzeichnet, dass** der Klemmeinsatz (59) von der einem Verdampfungsgefäß (5) zugewandten Seite der Nabe (58) aus in diese bis zu einem als Gegenschräge (65) ausgebildeten Ringabsatz einsetzbar ist und dass zur axialen Druckbeaufschlagung des Klemmeinsatzes (59) auf die Nabe (58) ein Spannschraubring (67) vorzugsweise lösbar aufschraubbar ist, der den über die Nabe (58) vorstehenden Klemmabschnitt (K2) des Klemmeinsatzes (59) mit einer am Innenumfang des Spannschraubringes (67) vorgesehenen Gegenschräge (66) beaufschlagt.

4. Rotationsverdampfer nach Anspruch 3, **dadurch gekennzeichnet, dass** der Spannschraubring (67) ein Gewinde (71) trägt, das mit einem Gegengewinde (72) an einem Abdrückschraubring (73) zusammenwirkt und dass beim Losschrauben des Abdrückschraubringes (73) vom Spannschraubring (67) der Abdrückschraubring (73) ein Verdampfungsgefäß (5) derart beaufschlagt, dass eine Klemm-oder Schliffverbindung zwischen diesem Verdampfungsgefäß (5) und der das Verdampfungsgefäß (5) tragenden Glashohlwelle (8) lösbar ist.

5. Rotationsverdampfer nach einem der Ansprüche 1 bis 4, **dadurch gekennzeichnet, dass** die Glashohlwelle (8) an ihrem Außenumfang zumindest eine Einformung (68) oder Ausformung trägt, der eine Ausformung (69) oder Einformung am Innenumfang des Klemmeinsatzes (59) zugeordnet ist.

6. Rotationsverdampfer nach Anspruch 5, **dadurch gekennzeichnet, dass** zumindest eine an der Glashohlwelle (8) oder am Klemmeinsatz (59) vorgesehene Einformung als Ringnut und die zugeordnete Ausformung als Ringwulst ausgebildet ist.

7. Rotationsverdampfer nach Anspruch 5 oder 6, **dadurch gekennzeichnet, dass** die zumindest eine am Klemmeinsatz (59) vorgesehene Einformung oder Ausformung in dem über die Nabe (58) vorstehenden Teilbereich des Klemmeinsatzes (59) und insbesondere am Innenumfang des über die Nabe (58) vorstehenden Klemmabschnittes (K2) angeordnet ist.

8. Rotationsverdampfer nach einem der Ansprüche 1 bis 7, **dadurch gekennzeichnet, dass** die als Glashohlwelle (8) ausgebildete Dampfdurchführung an ihrem einen ersten Wellenende ein Verdampfungsgefäß (5) trägt und mit ihrem anderen zweiten Wellenende in eine von einem Anschlussstutzen (75) umgrenzte Anschlussöffnung (74) eines Kühlers (6) vorsteht, wobei an der Glashohlwelle (8) ein Dichtring (76) dichtend anliegt, der zwischen dem Anschlussstutzen (75) und dem Antriebsgehäuse (77) eingespannt ist und als Ringscheibe ausgebildet ist, deren äußere Ringzone (78) als Einspannrand vorgesehen ist, wobei die Ringscheibe eine in Längsrichtung der Glashohlwelle (8) umgebogene oder abgewinkelte innere Ringzone (79) hat, und wobei der Dichtring (76) mit einem in Längsrichtung der Glashohlwelle orientierten Teilbereich (T) der Ringscheibe federelastisch an der Glashohlwelle (8) dichtend anliegt.

9. Rotationsverdampfer nach Anspruch 8, **dadurch gekennzeichnet, dass** der Dichtring (76) einstückig ausgebildet ist.

10. Rotationsverdampfer nach einem der Ansprüche 8 oder 9, **dadurch gekennzeichnet**, der Dichtring (76) als Materialcompound und insbesondere als Tefloncompound hergestellt ist.

11. Rotationsverdampfer nach einem der Ansprüche 8 bis 10, **dadurch gekennzeichnet, dass** am Anschlussstutzen (75) und/oder am Antriebsgehäuse (77) zumindest eine Ringnut oder ein Ringwulst (81) vorgesehen ist und dass der zumindest einen Ringnut und/oder dem wenigstens einen Ringwulst eine vorzugsweise eine komplementäre Ringnut oder ein Ringwulst am Einspannrand des Dichtringes zugeordnet ist.

12. Rotationsverdampfer nach einem der Ansprüche 8 bis 11, **dadurch gekennzeichnet, dass** der Dichtring (76) im Längsschnitt etwa U-, L- oder j-förmig ausgebildet ist.

13. Rotationsverdampfer nach einem der Ansprüche 8 bis 12, **dadurch gekennzeichnet, dass** der innere und die Ringöffnung des Dichtringes (76) umgrenzende Randbereich (95) in eine von der Glashohlwelle abgewandte Richtung gebogen oder abgewinkelt ist.

## Claims

1. Rotary evaporator (1) comprising a rotary drive (57) having a hub (58), and comprising a clamping insert (59) having a sleeve-like basic shape for clamping a damping passage, formed as a hollow glass shaft (8), in the hub (58) of the rotary drive (57), wherein the clamping insert (59) has two clamping portions (K1, K2) which are spaced apart from one another in the longitudinal direction and which each have at least one clamping incline (63, 64) which is inclined relative to the longitudinal axis of the clamping insert (59) and which cooperate with counter inclines (65, 66) of the rotary drive (57) which are allocated thereto, in such a way that the clamping portions (K1, K2) are pressed against the hollow glass shaft (8) by axial pressing of the clamping insert (59), wherein the clamping insert (59) has support webs (60) oriented in the longitudinal direction thereof, which are connected to one another via connecting webs (61, 62) oriented in the peripheral direction of the clamping insert (59), and wherein the support webs (60) and the connecting webs (61, 62) are in this way connected to the sleeve-like basic shape of the clamping insert (59), **characterised in that** the connecting webs (61, 62) alternately connect the web end regions of adjacent support webs (60), which are disposed on one side or which are disposed on the other side of the clamping insert (59), and that the mutually spaced clamping portions (K1, K2) are formed by the connecting webs (61, 62) which are provided on the opposite ends of the clamping insert (59) and which support the clamping inclines (63, 64).

2. Rotary evaporator as claimed in claim 1, **characterised in that** the clamping inclines (63, 64) supported by the connecting webs (61, 62) provided on opposite ends of the clamping insert (59) each have an outer cross-section tapering towards the adjacent end of the clamping insert (59).

3. Rotary evaporator as claimed in claim 1 or 2, **characterised in that** the clamping insert (59) can be inserted from the side of the hub (58) facing an evaporation vessel (5) into this hub as far as an annular shoulder formed as a counter incline (65), and that for the purpose of axially pressing the clamping insert (59) onto the hub (58) a tensioning screw ring (67) can be screwed preferably in a releasable manner and acts upon the clamping portion (K2) of the clamping insert (59), which protrudes over the hub (58), with a counter incline (66) provided on the inner periphery of the tensioning screw ring (67).

4. Rotary evaporator as claimed in claim 3, **characterised in that** the tensioning screw ring (67) has a thread (71) which cooperates with a counter thread (72) on a pressing screw ring (73) and that as the pressing screw ring (73) is being unscrewed from the tensioning screw ring (67), the pressing screw ring (73) acts upon an evaporation vessel (5) in such a way that a clamping or ground glass joint between this evaporation vessel (5) and the hollow glass shaft (8) supporting the evaporation vessel (5) can be released.

5. Rotary evaporator as claimed in any one of claims 1 to 4, **characterised in that** on its outer periphery the hollow glass shaft (8) has at least one indentation (68) or protrusion, to which a protrusion (69) or indentation on the inner periphery of the clamping insert (59) is allocated.

6. Rotary evaporator as claimed in claim 5, **characterised in that** at least one indentation provided on the hollow glass shaft (8) or on the clamping insert (59) is formed as an annular groove and the associated protrusion is formed as an annular bead.

7. Rotary evaporator as claimed in claim 5 or 6, **characterised in that** the at least one indentation or protrusion provided on the clamping insert (59) is disposed in the partial region of the clamping insert (59) protruding over the hub (58) and in particular on the inner periphery of the clamping portion (K2) protruding over the hub (58).

8. Rotary evaporator as claimed in any one of claims 1 to 7, **characterised in that** the damping passage formed as a hollow glass shaft (8) supports an evaporation vessel (5) on its first shaft end and protrudes with its other, second, shaft end into an attachment opening (74) of a cooler (6) which is bounded by an attachment piece (75), wherein a sealing ring (76) lies against the hollow glass shaft (8) in a sealing manner and is gripped between the attachment piece (75) and the drive housing (77) and is formed as an annular disc, the outer annular zone (78) of which is provided as a gripping edge, wherein the annular disc has an inner annular zone (79) which is curved or bent in the longitudinal direction of the hollow glass shaft (8), and wherein the sealing ring (76) lies in a sealing and resilient manner against the hollow glass shaft (8) with a partial region (T) of the annular disc which is oriented in the longitudinal direction of the hollow glass shaft.

9. Rotary evaporator as claimed in claim 8, **characterised in that** the sealing ring (76) is formed as one piece.

10. Rotary evaporator as claimed in any one of claims 8 or 9, **characterised in that** the sealing ring (76) is produced as a material compound and in particular as a Teflon compound.

11. Rotary evaporator as claimed in any one of claims 8 to 10, **characterised in that** at least one annular groove or annular bead (81) is provided on the attachment piece (75) and/or on the drive housing (77) and that the at least one annular groove and/or the at least one annular bead is allocated preferably a complementary annular groove or an annular bead at the gripping edge of the sealing ring.

12. Rotary evaporator as claimed in any one of claims 8 to 11, **characterised in that** the sealing ring (76) is formed with an approximately U-shaped, L-shaped or j-shaped longitudinal cross-section.

13. Rotary evaporator as claimed in any one of claims 8 to 12, **characterised in that** the inner edge region (95) defining the annular opening in the sealing ring (76) is curved or bent in a direction away from the hollow glass shaft.

## Revendications

1. Evaporateur rotatif (1), comprenant un entraînement rotatif (57) avec un moyeu (58) et un insert de serrage (59) avec une forme de base de type douille pour le serrage d'un conduit de vapeur réalisé sous forme d'arbre creux en verre (8) dans le moyeu (58) de l'entraînement rotatif (57), dans lequel l'insert de serrage (59) présente deux parties de serrage (K1, K2) espacées l'une de l'autre en direction longitudinale, qui portent respectivement au moins un chanfrein de serrage (63, 64) oblique par rapport à l'axe longitudinal de l'insert de serrage (59), qui coopèrent avec des chanfreins opposés (65, 66) de l'entraînement rotatif (57) qui leur sont associés, de telle manière que les parties de serrage (K1, K2) soient pressées par poussée de pression axiale contre l'arbre creux en verre (8), dans lequel l'insert de serrage (59) présente des nervures d'appui (60) orientées dans sa direction longitudinale, qui sont reliées les unes aux autres par des nervures de liaison (61, 62) orientées en direction périphérique de l'insert de serrage (59), et dans lequel les nervures d'appui (60) et les nervures de liaison (61, 62) sont de cette façon reliées à la forme de base de type douille de l'insert de serrage (59), **caractérisé en ce que** les nervures de liaison (61, 62) relient alternativement les régions d'extrémité de nervures, disposées sur un côté ou sur l'autre côté de l'insert de serrage (59), de nervures d'appui voisines (60), et **en ce que** les parties de serrage (K1, K2) espacées l'une de l'autre sont formées par les nervures de liaison (61, 62) prévues aux extrémités opposées de l'insert de serrage (59) et portant les chanfreins de serrage (63, 64).

2. Evaporateur rotatif selon la revendication 1, **caractérisé en ce que** les chanfreins de serrage (63, 64) portés par les nervures de liaison (61, 62) prévues à des extrémités opposées de l'insert de serrage (59) présentent respectivement une section transversale extérieure se rétrécissant en direction de l'extrémité voisine de l'insert de serrage (59).

3. Evaporateur rotatif selon la revendication 1 ou 2, **caractérisé en ce que** l'insert de serrage (59) peut être introduit dans le moyeu (58) par un côté de celui-ci tourné vers le récipient d'évaporation (5) jusqu'à un épaulement annulaire configuré comme chanfrein opposé (65), et **en ce qu'**une bague filetée de serrage (67) peut être vissée, de préférence de façon séparable, sur le moyeu (58) pour la poussée de pression axiale de l'insert de serrage (59), cette bague poussant la partie de serrage (K2) de l'insert de serrage (59) saillante au-dessus du moyeu (58) avec un chanfrein opposé (66) prévu sur la périphérie intérieure de la bague filetée de serrage (67).

4. Evaporateur rotatif selon la revendication 3, **caractérisé en ce que** la bague filetée de serrage (67) porte un filet (71), qui coopère avec un filet opposé (72) sur une bague filetée de poussée (73) et **en ce que**, lors du desserrage de la bague filetée de poussée (73) de la bague filetée de serrage (67), la bague filetée de poussée (73) pousse un récipient d'évaporation (5) de telle manière qu'un joint serré ou rodé entre ce récipient d'évaporation (5) et l'arbre creux en verre (8) portant le récipient d'évaporation (5) soit séparable.

5. Evaporateur rotatif selon l'une quelconque des revendications 1 à 4, **caractérisé en ce que** l'arbre creux en verre (8) porte à sa périphérie extérieure au moins un enfoncement (68) ou un renflement, auquel un renflement (69) ou un enfoncement est associé sur la périphérie intérieure de l'insert de serrage (59).

6. Evaporateur rotatif selon la revendication 5, **caractérisé en ce qu'**au moins un enfoncement prévu sur l'arbre creux en verre (8) ou sur l'insert de serrage (59) est réalisé en forme de rainure annulaire et le renflement associé en forme de bourrelet annulaire.

7. Evaporateur rotatif selon la revendication 5 ou 6, **caractérisé en ce que** ledit au moins un enfoncement ou renflement prévu sur l'insert de serrage (59) est disposé dans la région partielle de l'insert de serrage (59) saillante au-dessus du moyeu (58) et en particulier sur la périphérie intérieure de la partie de serrage (K2) saillante au-dessus du moyeu (58).

8. Evaporateur rotatif selon l'une quelconque des revendications 1 à 7, **caractérisé en ce que** le conduit de vapeur réalisé en forme d'arbre creux en verre (8) porte un récipient d'évaporation (5) à sa première extrémité d'arbre et est saillant avec sa deuxième autre extrémité d'arbre dans une ouverture de raccordement (74) d'un refroidisseur (6) délimitée par un embout de raccordement (75), dans lequel un joint torique (76) est appliqué de façon étanche sur l'arbre creux en verre (8), qui est serré entre l'embout de raccordement (75) et le boîtier d'entraînement (77) et qui est réalisé en forme de rondelle annulaire, dont la zone annulaire extérieure (78) est prévue comme bord de serrage, dans lequel la rondelle annulaire comporte une zone annulaire intérieure (79) recourbée ou coudée dans la direction longitudinale de l'arbre creux en verre (8), et dans lequel le joint torique (76) s'applique élastiquement de façon étanche sur l'arbre creux en verre (8) avec une région partielle (T) de la rondelle annulaire orientée dans la direction longitudinale de l'arbre creux en verre.

9. Evaporateur rotatif selon la revendication 8, **caractérisé en ce que** le joint torique (76) est réalisé en une seule pièce.

10. Evaporateur rotatif selon l'une des revendications 8 ou 9, **caractérisé en ce que** le joint torique (76) est fabriqué comme un composite de matière et en particulier comme un composite de téflon.

11. Evaporateur rotatif selon l'une quelconque des revendications 8 à 10, **caractérisé en ce qu'**il est prévu sur l'embout de raccordement (75) et/ou sur le boîtier d'entraînement (77) au moins une rainure annulaire ou un bourrelet annulaire (81), et **en ce qu'**une rainure annulaire de préférence complémentaire ou un bourrelet annulaire sur le bord de serrage du joint torique est associé à ladite au moins une rainure annulaire et/ou audit au moins un bourrelet annulaire.

12. Evaporateur rotatif selon l'une quelconque des revendications 8 à il, **caractérisé en ce que** le joint torique (76) est réalisé environ en forme de U, de L ou de J en coupe longitudinale.

13. Evaporateur rotatif selon l'une quelconque des revendications 8 à 12, **caractérisé en ce que** la région de bord intérieure (95) et entourant l'ouverture annulaire du joint torique (76) est recourbée ou coudée dans une direction opposée à l'arbre creux en verre.
